# EUROPEAN PATENT APPLICATION

(11) **EP 4 807 525 A1**
(43) Date of publication of application: **16.09.2026**
(21) Application number: 26162896.0
(22) Date of filing: 06.03.2026
(51) Int. Cl.: G06F 3/14, G06F 9/451, H04L 67/025

(54) **EFFICIENT MANAGEMENT OF MONITOR CONFIGURATION DATA IN A REMOTE DESKTOP ENVIRONMENT**

(30) Priority: 14.03.2025 US 202519080700
(71) Applicant: Microsoft Technology Licensing, LLC, Redmond, WA 98052 (US)
(72) Inventor: BELKINE, Artem, Redmond, Washington, 98052 (US); PATNAIK, Sandeep, Redmond, Washington, 98052 (US)
(74) Representative: CMS Cameron McKenna Nabarro Olswang LLP

(57) **Abstract**

Methods, computer systems, and computer storage media are provided for facilitating implementation of efficient management of monitor configuration data in a remote desktop environment. In embodiments, a dynamic virtual channel established between a remote desktop client device and a remote desktop server is used to provide a global set of monitor configuration data for a remote desktop session. Thereafter, at the remote desktop client device, an updated set of monitor configuration data is identified during the remote desktop session. The updated set of monitor configuration data for the remote desktop session is provided to the remote desktop server via the dynamic virtual channel.

## Description

### BACKGROUND

Remote desktop services enable users to access and control a remote computer or virtual machine from another device, providing a virtual desktop experience. Typically, a client device communicates with a remote desktop server via a terminal service using a remote desktop protocol (RDP) stack to facilitate communication. Monitor configuration data is generally communicated from the client device to the remote desktop server to enable the client device to obtain content from the remote desktop server that matches the monitor capabilities of the client device.

In conventional implementations, the client device provides initial monitor configuration data to the remote desktop server in a different manner than is used to provide subsequent monitor configuration data. In this regard, different channels and protocols are used to communicate initial monitor configuration data as compared to those used to communicate subsequent monitoring configuration data. Utilizing different channels and protocols to communicate monitor configuration data unnecessarily consumes computer resources. Further, in communicating monitor configuration data, a complete snapshot of monitor configuration data associated with each monitor of a remote desktop session is provided. Providing an entire set of monitor configuration data, even when only a particular aspect(s) of a monitor is modified, also results in unnecessarily consuming computing resources in association with the client device, the remote desktop server, and network resources.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Various aspects of the technology described herein are generally directed to systems, methods, and computer storage media for, among other things, facilitating management of monitor configuration data in a remote desktop environment in an efficient and effective manner. In particular, a single dynamic virtual channel and an enhanced protocol is used to communicate monitor configuration data between a remote desktop client device and a remote desktop server in a remote desktop environment. In this way, both an initial communication of monitor configuration data and a subsequent communication of monitor configuration data are communicated via a single channel and a single protocol. Further, in accordance with embodiments described herein, monitor configuration data may be communicated in a global manner that provides an entire set of monitor configuration data and/or an updated manner that provides a portion of a set of monitor configuration data. For example, in accordance with a modification of a monitor configuration (e.g., a change of resolution), the entire set of monitor configuration data need not be communicated, but rather only the monitor configuration data corresponding with the modification may be communicated. Advantageously, the enhanced protocol facilitates communication of updated monitor configuration data, communication of monitor configuration data in a bi-directional manner, and communication of monitor configuration data that supports High Dynamic Range (HDR) monitors.

### BRIEF DESCRIPTION OF THE DRAWINGS

The technology described herein is described in detail below with reference to the attached drawing figures, wherein:
FIG. 1 is a block diagram illustrating an example operation of a remote desktop environment, suitable for use in implementing aspects of the technology described herein;
FIG. 2 provides an example remote desktop server that facilitates implementation of efficient management of monitor configuration data in a remote desktop environment, in accordance with aspects of the technology described herein;
FIG. 3 provides a first example method for facilitating efficient management of monitor configuration data, in accordance with aspects of the technology described herein;
FIG. 4 provides a second example method for facilitating efficient management of monitor configuration data, in accordance with aspects of the technology described herein;
FIG. 5 provides a third example method for facilitating efficient management of monitor configuration data, in accordance with aspects of the technology described herein; and
FIG. 6 is a block diagram of an exemplary computing environment suitable for use in implementing aspects of the technology described herein.

### DETAILED DESCRIPTION

The technology described herein is described with specificity to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and "block" may be used herein to connote different elements of methods employed, the terms should not be interpreted as implying any particular order among or between various steps herein disclosed unless and except when the order of individual steps is explicitly described.

### Overview

Remote desktop services allow users to access and control a remote computer or virtual machine from another device. In this regard, users can connect to workstations, servers, or other computers remotely, thereby providing a virtual desktop experience. In this way, users can perform various tasks on a computing device as if physically present at the remote computer. Such various tasks may include, for example, running applications, accessing files, managing settings, and performing administrative tasks.

Generally, a client device includes a remote desktop application that is used to communicate with a remote desktop server via a terminal service executing at the remote desktop server. In establishing a connection between the remote desktop application of the client device and the terminal service of the remote desktop server, a remote desktop protocol (RDP) stack is initiated at the remote desktop server. In a remote desktop environment, RDP technology is utilized to enable efficient communication between the client device and the remote desktop server. The RDP stack facilitates the RDP communication between the client device and the remote desktop server. For example, the RDP stack can manage how data is packaged, transmitted, and/or received during remote desktop sessions. The RDP stack may also perform session management (e.g., authentication, encryption, and connection negotiation between the client device and the remote desktop server) and input/output management (e.g., transmission of user input from the client device to the remote desktop server and delivery of output from the remote desktop server to the client device).

In accordance with the remote desktop client device initially connecting to the remote desktop server, a base RDP protocol is generally used to establish the session and negotiate initial parameters. In conventional implementations, such an initial setup includes communicating monitor configuration data. Monitor configuration data generally describes the display settings for a remote desktop session to ensure the graphical environment, including screen resolution, monitor layout, and other visual elements, is consistent across the remote desktop client device and the remote desktop server. As such, in a remote desktop environment, monitor configuration data is used to obtain suitable content and/or perform graphical data encoding (e.g., via a video encoder, such as an HDR video encoder). In particular, the video driver of a remote desktop server may obtain monitor configuration data for use in establishing virtual monitors, such as HDR virtual monitors. In this way, the video driver may obtain graphical data. Additionally or alternatively to obtaining the monitor configuration data, the video driver may provide the monitor configuration data to the video encoder (e.g., HDR video encoder) for use in encoding graphical data.

In operation, in conventional implementations, the remote desktop client device provides the monitor configuration data to the remote desktop server. Initially, during an initial connection between a remote desktop client device and a remote desktop server to establish a remote desktop session, an initial transmission or code pass of monitor configuration data is performed via an initial channel. In this regard, a base protocol is used to deliver monitor configuration data along with various other initialization data in accordance with performing the initial setup exchange. The base protocol generally includes a fixed packet data unit (PDU) message size (e.g., 10-20 kilobytes). Such a fixed PDU message size is oftentimes insufficient. For example, assume multiple monitors (e.g., 4 monitors) are intended to be supported, and Extended Display Identification Data (EDID) blobs are used to convey display capabilities. Although EDID blobs may vary in size (e.g., 16 kilobytes) depending on the Original Equipment Manufacturer (OEM), the existing base protocol is oftentimes insufficient to communicate the entirety of the monitor configuration data for multiple monitors, and in particular HDR monitors, along with other connection data in the initial PDU communication, thereby resulting in a failure to establish a remote desktop session. Accordingly, such conventional implementations do not allow for communicating HDR monitor configuration data and/or monitor configuration data associated with multiple monitors.

Further, in conventional implementations, in cases of a monitor configuration modification (e.g., resolution changes, addition of a monitor, or the like), a subsequent transmission or code pass of monitor configuration data is performed via a different channel using a different protocol. Such a second code pass is provided via a nonoptimized path. In particular, the monitor configuration data is provided through another hop via an RDP clip application, which is generally used to capture clipboard hotkeys related to copy and paste during a remote desktop session. As such, the monitor configuration data is communicated to the terminal service of the remote desktop server and then to the RDP clip to the video server, thereby inefficiently using various computing resources.

In addition to using an initial channel to communicate initial monitor configuration data and a secondary channel to communicate subsequent monitor configuration data, an entire set of monitor configuration data is communicated from the remote desktop client device to the remote desktop server in both instances. In this way, in accordance with a change of a monitor configuration, the entire set of monitor configuration data is packaged and communicated. Packaging and communicating an entire set of monitor configuration data unnecessarily uses computing resources at the remote desktop client device, particularly when only a portion of the monitor configuration data is modified. Further, the remote desktop server also unnecessarily uses computing resources to process the entire set of monitor configuration data. For example, in accordance with obtaining a new entire set of monitor configuration data at the remote desktop server, the remote desktop server deletes all the virtual monitors for the remote desktop session and reconfigures or reestablishes the virtual monitors using the newly obtained monitor configuration data, resulting in an expensive and computer resource-intensive process for the remote desktop server. For instance, the operating system operating on the remote desktop server may deliver notifications pertaining to the update to all the applications running on the remote desktop server and, thereafter, each application (e.g., of hundreds of applications) may update accordingly, resulting in a tedious process.

Accordingly, embodiments herein are directed to efficient management of monitor configuration data in a remote desktop environment. In particular, a single channel and protocol, referred to herein as an enhanced protocol, is used to communicate monitor configuration data between a remote desktop client device and a remote desktop server in a remote desktop environment via a virtual dynamic channel. In this way, both an initial communication of monitor configuration data and a subsequent communication of monitor configuration data are communicated via a single channel and a single protocol. Further, in accordance with embodiments described herein, monitor configuration data may be communicated in a global manner that provides an entire set of monitor configuration data and/or an updated manner that provides a portion of a set of monitor configuration data. For example, in accordance with a modification of a monitor configuration (e.g., a change of resolution), the entire set of monitor configuration data need not be communicated, but rather only the monitor configuration data corresponding with the modification may be communicated. As another example, assume a USB cable is plugged into a computing device. In such a case, the new monitor configuration data may be communicated instead of the entire set of monitor configuration data associated with the entire monitor layout. In this regard, the remote desktop server can add the new monitor configuration data, as opposed to recreating or reconfiguring all monitors associated with the remote desktop session, resulting in a more efficient use of computing resources.

In operation, and at a high level, a remote desktop client device may use an enhanced protocol to communicate an initial set of monitor configuration data via a virtual dynamic channel to a remote desktop server. In some cases, the initial set of monitor configuration data is communicated in accordance with or after the remote desktop session is established. For example, upon establishing a remote desktop session, a virtual dynamic channel may be established between the remote desktop client device and a remote desktop server and, thereafter, a global set of monitor configuration data that represents an entirety of the monitor configuration data (e.g., associated with each monitor of a remote desktop session) may be provided using the enhanced protocol over the virtual dynamic channel. In accordance with embodiments described herein, the virtual dynamic channel is established to communicate only monitor configuration data. Further, as the monitor configuration data is separated from other initialization data, the enhanced protocol enables a more extensive amount of data to be communicated, thereby enabling HDR monitor configuration data and/or monitor configuration data associated with multiple monitors to be communicated.

In accordance with a modification to monitor configuration data, the remote desktop client device may use the enhanced protocol to communicate a refreshed set of monitor configuration via the same virtual dynamic channel to the remote desktop server. A refreshed set of monitor configuration data generally refers to monitor configuration data that is communicated subsequent to the initial monitor configuration data, typically including updates to monitor configuration data. In this regard, based on a modification of one or more monitor configuration data, a refreshed set of monitor configuration data that represents the modified configuration data is communicated via the virtual dynamic channel. As described herein, using the enhanced protocol, the refreshed set of monitor configuration data may be provided using a global set of monitor configuration data or an updated set of monitor configuration data communicated over a same dynamic virtual channel.

In accordance with communicating monitor configuration data (e.g., global monitor configuration data or updated monitor configuration data) to the remote desktop server, the remote desktop server may process the data. In this regard, the monitor configuration data is obtained at the terminal service (e.g., RDP stack) and provided to the video driver. The monitor configuration data may then be used to initiate, establish, or set a virtual monitor(s) associated with a monitor(s), such as an HDR monitor(s), indicated in the monitor configuration data. For example, the operating system, or other component, may recognize that the remote desktop client device can support HDR graphical data for a remote desktop session. As such, the video driver can obtain suitable graphical data in the form of 8 bytes per pixel (as opposed to 4 bytes per pixel). As such, new frames (e.g., including a surface[s]) with the HDR format of 8 bytes per pixel are provided from the video driver to a video encoder (e.g., HDR video encoder) for encoding, such that the remote desktop client device can be provided with graphical data that can be projected or displayed in accordance with HDR display technology. A surface generally refers to an area or space where graphics are rendered or displayed. Advantageously, in cases in which a video driver obtains updated monitor configuration data, the video driver may more efficiently refine or modify the virtual monitors using the newly obtained monitor configuration data, in contrast to conventional implementations in which the virtual monitors are deleted and new virtual monitors established with the entirety of the monitor configuration data. The enhanced protocol described herein enables updates to the virtual monitors. For example, the enhanced protocol enables communicating updated monitor configuration data. Further, the enhanced protocol includes utilization of monitor identifiers, thereby facilitating identification of particular virtual monitors to update.

### Overview of Exemplary Environments for Facilitating Efficient Management of Monitor Configuration Data in a Remote Desktop Environment

As described, a user may desire to access computing applications remotely, e.g., applications that are running on a separate computing device. In this regard, a remote desktop environment or service may be used to provide a user with such access. A remote desktop environment or service includes a computer system that maintains applications that can be remotely executed by client computer systems. Input is entered at a client computer system and traversed over a network (e.g., using protocols based on the International Telecommunications Union (ITU) T.120 family of protocols such as Remote Desktop Protocol [RDP]) to an application on a server, such as remote desktop server or terminal server. The application processes the input as if the input were entered at the server.

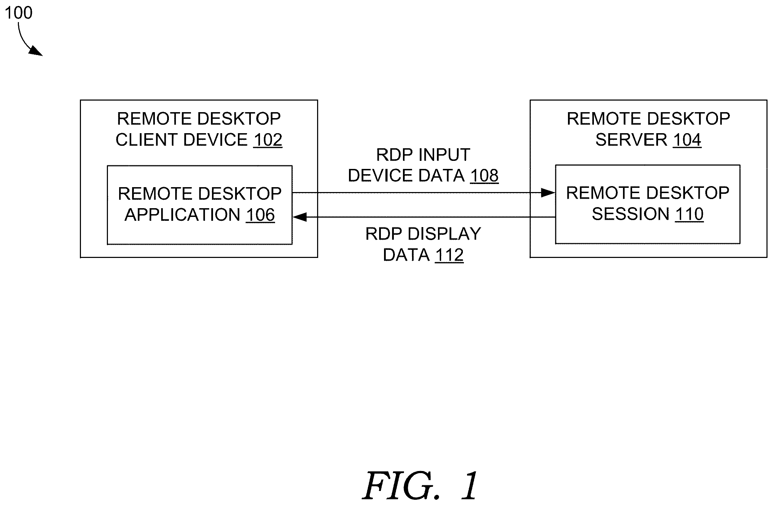

FIG. 1 provides a diagrammatic overview of the operation of a remote desktop environment 100. The remote desktop environment 100 includes a remote desktop client device 102 and a remote desktop server 104. Remote desktop client device 102 may be a client device on a client-side of remote desktop environment 100, while remote desktop server 104 may be on a server-side of remote desktop environment 100. Remote desktop server 104 may comprise server-side software designed to work in conjunction with client-side software on remote desktop client device 102 so as to implement any combination of the features and functionalities discussed in the present disclosure. The remote desktop environment 100 shown in FIG. 1 is an example of one suitable environment and is not intended to suggest any limitation as to the scope of use or functionality of embodiments disclosed throughout this document, nor should the exemplary remote desktop environment 100 be interpreted as having any dependency or requirement related to any single component or combination of components illustrated therein. For example, any number of remote desktop client devices 102 and/or remote desktop servers 104 may exist within a remote desktop environment 100. For instance, multiple remote desktop client devices 102 may communicate with the remote desktop server 104.

A remote desktop client device 102 and a remote desktop server 104 can communicate through a network, which may include any number of networks, such as, for example, a local area network (LAN), a wide area network (WAN), the Internet, a cellular network, a peer-to-peer (P2P) network, a mobile network, or a combination of networks. In embodiments, the remote desktop client device 102 and the remote desktop server 104 communicate using RDP. Although illustrated and discussed as using RDP for communication, any remote access protocol may be used to enable the remote desktop client device 102 to connect to remote desktop server 104. Other examples of remote access protocol include, but are not limited to, Secure Shell (SSH), Virtual Network Computing (VNC), and TeamViewer.

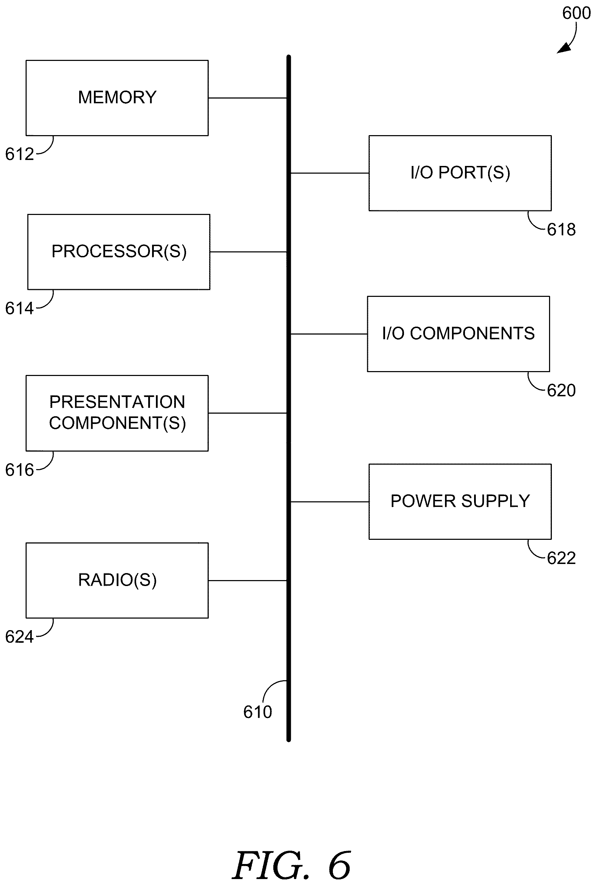

The remote desktop client device 102 can be any kind of computing device capable of facilitating a remote desktop session. For example, in an embodiment, the remote desktop client device 102 can be a computing device such as computing device 600, as described below with reference to FIG. 6. In embodiments, the remote desktop client device 102 can be a personal computer (PC), a laptop computer, a workstation, a mobile computing device, a PDA, a cell phone, or the like.

In one embodiment, the remote desktop client device 102 may include HDR capabilities. HDR capabilities generally refer to the ability of a device (e.g., remote desktop client device 102) to process and display HDR content. A device having HDR capabilities can generally support HDR content playback and often includes features, such as HDR decoding, tone mapping, and color reproduction enhancements. HDR content generally refers to multimedia content, such as images, videos, or games, that is encoded or created with enhanced dynamic range compared to standard dynamic range (SDR) content. For example, HDR content may be created with a wider range of luminance levels, allowing for brighter highlights, deeper shadows, and more detail in both bright and dark areas of the image or video. HDR content may use a wider color gamut compared to SDR content, allowing for more vibrant and accurate reproduction of colors. HDR content may use a higher bit depth such that it can represent more shades of color and luminance compared to SDR content. Additionally, HDR content may be accompanied by metadata that specifies its HDR parameters, such as peak brightness levels, color gamut, and mastering display characteristics.

The remote desktop client device 102 may include or be in communication with an HDR monitor (not shown). An HDR monitor may be a display device designed and/or optimized to meet requirements of HDR content. Generally, an HDR monitor features specialized hardware and technology to attain higher peak brightness levels, wider color gamuts, and better contrast ratios compared to SDR.

The remote desktop client device 102 can include one or more processors and one or more computer-readable media. The computer-readable media may include computer-readable instructions executable by the one or more processors. The instructions may be embodied by one or more applications, such as remote desktop application 106 shown in FIG. 1. The application(s) may generally be any application capable of facilitating a remote desktop session(s). In some implementations, the application(s) comprises a web application, which can run in a web browser, and may be hosted at least partially server-side (e.g., via a server). In addition, or instead, the application(s) can comprise a dedicated application. In some cases, the application is integrated into the operating system (e.g., as a service).

The remote desktop client device 102 is generally operated by a user or entity that initiates a remote desktop session. In this way, a user may desire to access and interact with a computer or desktop environment remotely (e.g., over a network connection). In a remote desktop session, a user's inputs (e.g., mouse movements, keyboard inputs, touch gestures, and the like) are transmitted to the remote desktop server 104, and the graphical output of the remote desktop server 104 is provided to the remote desktop client device 102.

In operation, the remote desktop client device 102 runs a remote desktop application 106 that sends RDP input device data 108, such as, for example, keyboard data and mouse click data, to a remote desktop session 110 that has been initiated in the remote desktop server and receives RDP display data 112, such as user interface graphical data. Generally, the remote desktop application 106 is a thin client process and most processing is provided on the remote desktop server 104.

When a remote desktop client device connects to a remote desktop server via a remote desktop server gateway (not shown), the gateway may open a socket connection with the remote desktop server and redirect client traffic on the RDP port or a port dedicated to remote access services. The gateway may also perform certain gateway-specific exchanges with the client using a terminal servicer gateway protocol transmitted over HTTPS.

During the remote desktop session 110, an application running in the session generates output in response to the received input device data 108, and the output RDP display data 112 is transferred over the network to the remote desktop client device 102. The remote desktop client device 102 runs a remote desktop application 106 that presents the output data. Thus, the input is received and output presented at the remote desktop client device 102, while processing occurs at the remote desktop server 104. A session can include an operating system shell and a user interface such as a desktop, subsystems that track mouse movement within the desktop, subsystems that translate a mouse click on an icon into commands that effectuate an instance of a program, or the like. It should be understood that the foregoing discussion is exemplary, and the presently disclosed embodiments may be implemented in various client/server environments and are not limited to a particular remote desktop services product. One example of a remote desktop system is Remote Desktop Services provided by Microsoft^{®} Corporation.

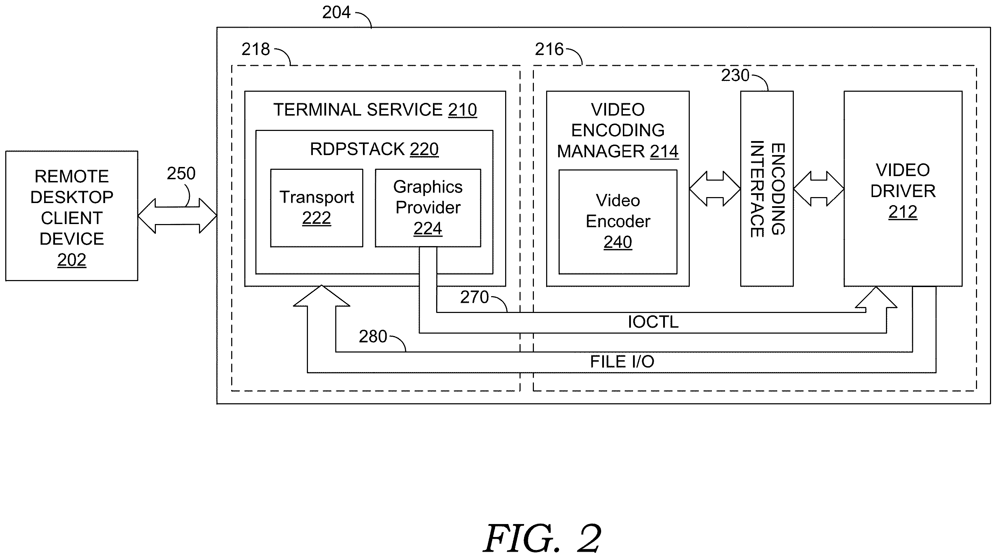

FIG. 2 provides an example environment that facilitates efficient and effective management of monitor configuration data in a remote desktop environment. As illustrated in FIG. 2, the remote desktop server 204 facilitates implementation of monitor configuration data in association with a remote desktop client device 202 in a remote desktop environment. In particular, the remote desktop client device 202 communicates monitor configuration data using an enhanced protocol via a single channel to the remote desktop server 204. The remote desktop server 204 obtains and effectively utilizes monitor configuration data associated with a monitor(s) of the remote desktop client device. In some cases, unlike conventional techniques, the present techniques perform graphical data encoding separately from a terminal service 210, thereby performing data encoding for HDR technology in a more effective and efficient manner. For example, graphical data is encoded in association with a video driver 212 (e.g., via the video encoding manager 214 and/or video encoder 240) before being communicated to the terminal service 210. In this way, graphical data encoding is performed in association with the data acquisition process components 216 (or driver process), which is separate from the session managing process components 218 (or RDP stack process). The data acquisition process components 216 are generally configured to acquire graphical data, for example, via the operating system, application, and/or the like. The session managing process components 218 are generally configured to manage remote desktop sessions, including performing user authentication, session creation, session management, and data transmission between a remote desktop client device 202 and the remote desktop server 204 during remote desktop sessions. The session managing process components 218 may operate at the application layer, while the data acquisition process components 216 may operate at a different layer level (e.g., a lower level) than the session managing process components.

In operation, a remote desktop client device 202 may communicate with the remote desktop server 204 via a remote desktop application operating on the remote desktop client device. In particular, the remote desktop client device, via the remote desktop application (e.g., remote desktop application 106 of FIG. 1), may connect with the terminal service 210 running on the remote desktop server 204. In some cases, the terminal service 210 may manage multiple RDP sessions (e.g., one or more users executes concurrent remote desktop sessions), for example, via a single process.

In connecting with the terminal service 210, the remote desktop application may initiate and communicate a connection request to initiate a remote desktop session (e.g., via a channel not shown and a base protocol, such as a base RDP protocol). A connection request may be initiated in a number of ways. For example, in some cases, a connection request may be initiated based on the remote desktop application (e.g., 106 of FIG. 1) being launched. In other cases, a connection request may be initiated based on a user selection via the remote desktop application. In some cases, in accordance with initiating the connection request, communication between the remote desktop client device (e.g., 102 of FIG. 1) and the remote desktop server 204 may be exchanged to perform authentication (e.g., verifying username and password of user), among other things.

In accordance with a successful authentication, a connection is established between the remote desktop client device 202 and the remote desktop server 204. Establishing a connection may include, for example, negotiating protocol versions, security settings, and/or other parameters to ensure a stable and secure connection between the remote desktop client device 202 and the remote desktop server 204. For example, the remote desktop client device 202 and the remote desktop server 204 may negotiate connection parameters and establish a secure communication channel using the RDP that encrypts the data exchanged between the remote desktop client device 202 and the remote desktop server 204.

Upon establishing the connection, the terminal service 210 may facilitate initializing a new remote desktop session for the authenticated user. Initializing a remote desktop session may include setting up the user's desktop environment, preparing the display, and/or loading necessary resources for the remote desktop session.

In accordance with establishing a remote desktop session, a driver process may be initiated. At a high level, a driver process may capture video output associated with a remote desktop session and prepare data for transmitting to the remote desktop client device 202. In this way, the driver process acts as a virtual GPU by capturing display content or graphical output of the remote desktop session and preparing such data for transmission to the remote desktop client device 202. In some cases, an encoding dynamic link library (DLL) is loaded (e.g., upon establishing the driver process) to handle compression and encoding of the graphical data. The DLL may provide different encoding techniques (e.g., bitmap compression or H.264) to reduce bandwidth required to transmit video data to the remote desktop client device.

In embodiments, the remote desktop client device 202 may communicate monitor configuration data to the remote desktop server 204, for example, to the terminal service 210 of the remote desktop server 204. In some cases, the monitor configuration data may be communicated to the remote desktop server 204 during or following the connection initialization phase. As such, monitor configuration data may be communicated before, during, and/or after the remote desktop session is established.

In one implementation, monitor configuration data is communicated upon initiating or establishing the driver process. As such, in some cases, upon initiating and/or establishing the driver process, the remote desktop server 204 may communicate or provide a dynamic virtual channel 250, or an indication thereof, to the remote desktop client device 202 for use in communicating monitor configuration data. In some cases, a capabilities exchange may occur to indicate a supported version of the RDP protocol. Such a dynamic virtual channel 250 may be used for all communications regarding monitor configuration data for the remote desktop session. In this regard, both initial monitor configuration data (e.g., global configuration data) and refreshed monitor configuration data (e.g., updated configuration data) may be communicated to and/or from the remote desktop server 204 using the dynamic virtual channel 250.

In accordance with the remote desktop client device 202 obtaining an indication of a dynamic virtual channel 250, the remote desktop client device 202 may communicate monitor configuration data using such a dynamic virtual channel 250. Monitor configuration data generally refers to data associated with the configuration of a display device(s) associated with the remote desktop client device. For example, monitor configuration data may include data associated with various display device parameters, such as resolution, color depth, supported refresh rates, and/or other display parameters.

By way of example only, monitor configuration data may include data related to various parameters including a configuration mode, a display mode, a scale factor, a physical size, a colorimetry, an SDR white level, a monitor description, and/or container information. A configuration mode may refer to a specific configuration or preset that describes how the monitor processes and displays content. This can include different color profiles, brightness settings, and HDR modes (e.g., HDR10, Dolby Vision, or the like). A display mode may refer to the overall display configuration or operating mode of the monitor, such as, for example, settings such as resolution, refresh rate, aspect ratio, and orientation. In the context of HDR monitors, the display mode may also include parameters specific to HDR content playback, such as HDR brightness levels and color space settings. A scale factor may refer to a multiplier applied to a size of graphical elements on the screen, for example, to accommodate different display resolutions or dots per inch settings. The scale factor may also indicate how content is displayed or rendered on the screen, such as when scaling between different resolutions or aspect ratios. Physical size may refer to the dimensions of the monitor screen (e.g., represented in inches or centimeters). An indication of the physical size of the monitor allows for accurate calibration and adjustment of viewing distances, as well as ensuring that content is displayed correctly across different display devices. Colorimetry may refer to measurement of color, including parameters such as color temperature, color space, and color accuracy. In HDR monitor configuration data, colorimetry information may include details about the monitor's color space coverage (e.g., DCI-P3, Rec. 2020), white point settings, gamma curve, and calibration profiles. This information helps ensure that colors are reproduced accurately and consistently on the monitor. SDR white level may refer to the standard luminance level used for displaying white in SDR content. In HDR monitor configuration data, specifying the SDR white level ensures compatibility with legacy SDR content by defining the target brightness for white. This parameter helps maintain consistency when switching between HDR and SDR content on the same monitor. Monitor description may include detailed information about the monitor's specifications, features, and capabilities. For example, monitor description may indicate the manufacturer, model name, serial number, supported resolutions and refresh rates, connectivity options, HDR compatibility, and/or other relevant details. Monitor descriptions help users identify and configure their monitors correctly within operating systems and software applications. Container information may refer to metadata or information embedded within multimedia container formats (e.g., MP4, MKV, or the like) that describes the characteristics of the video content, including HDR metadata. In the context of HDR monitor configuration data, container info may include details about the HDR format used (e.g., HDR10, Dolby Vision, or the like), color space information, mastering display characteristics, and other parameters necessary for accurate rendering of HDR content on compatible monitors.

Providing monitor configuration data to the remote desktop server 204 enables the server to adapt display output to match or align with the capabilities of the remote desktop client device 202. As such, the remote desktop session may be displayed correctly on the remote desktop client's display screen, taking into account attributes such as screen resolution, color depth, and multiple monitor configurations. As the remote desktop client device may include or be associated with multiple monitors, the monitor configuration data may correspond with multiple monitors.

Monitor configuration data is generally determined at the remote desktop client device 202 based on characteristics and capabilities of the display device(s) connected to or associated with the remote desktop client device 202. The monitor configuration data may be obtained from the display device(s) or monitor(s), for example, using a standard protocol of Extended Display Identification Data (EDID). In this way, the remote desktop client device 202 may extract EDID from each corresponding display device (e.g., monitor), or the display device may communicate its capabilities to the remote desktop client device via the EDID protocol. For example, the display device may provide a data structure in the form of an EDID block containing monitor configuration information such as supported resolution, refresh rates, color capabilities, aspect ratios, and other display parameters. In some cases, the EDID data is structured as a binary blob, which may include a series of bytes organized into specific data blocks. Each data block may include information about different aspects of the display device, such as supported resolutions, refresh rates, color formats, aspect ratios, and/or manufacturer details.

In some embodiments, the operating system of the remote desktop client device 202 may obtain the EDID information from a connected display device(s) and make it available to applications and/or services (e.g., remote desktop client application[s]) running on the remote desktop client device 202. In some cases, the operating system or the remote desktop client application may use the obtained EDID to determine or derive the monitor configuration data. For example, only a portion of the EDID may be communicated. As another example, EDID information may be parsed and sent in a different format. In other cases, the operating system or the remote desktop client application may extract the EDID data and encapsulate it into a binary blob for transmission to the remote desktop server. In this regard, the entire EDID may be communicated as a binary blob.

The remote desktop client device 202 may then provide such monitor configuration data (e.g., EDID blob[s] or a representation[s] or derivation[s] thereof) to the terminal service 210. As described, monitor configuration data may be communicated or provided via a dynamic virtual channel 250 to the remote desktop server 204 (e.g., the terminal service 210). The dynamic virtual channel generally refers to a channel used to specifically communicate monitor configuration data. The dynamic virtual channel 250 may be established between the remote desktop client device and the terminal service 210 (e.g., following establishment of a remote desktop session).

In accordance with embodiments described herein, the dynamic virtual channel 250 may be used to communicate initial monitor configuration data as well as refreshed monitor configuration data. In this way, both initial monitor configuration data and refreshed monitor configuration data use a same dynamic virtual channel 250 to communicate monitor configuration data throughout a remote desktop session. Initial monitor configuration data generally refers to monitor configuration data communicated in accordance with initiation of a remote desktop session. Such data is generally provided when a remote desktop session is first established and provides data related to the initial monitor setup (e.g., resolution, number of monitors, orientation, and positioning). Refreshed monitor configuration data generally refers to monitor configuration data communicated after the initial monitor configuration data has been communicated, that is, after the initiation of the remote desktop session. For example, assume a user modifies a monitor setup (e.g., adds or removes a monitor[s], alters resolution, modifies layout, or the like) during a remote desktop session. In such a case, the refreshed monitor configuration data may be provided via the dynamic virtual channel 250.

In embodiments, the monitor configuration data may be provided over the dynamic virtual channel 250 to the terminal service 210 via an enhanced protocol (e.g., an enhanced RDP protocol). In embodiments, the enhanced protocol may be in the form of an enhanced RDP protocol. As can be appreciated, monitor configuration data (e.g., obtained via EDID) for an HDR monitor may include additional information compared to a standard monitor. For example, HDR monitors may support a higher color depth (e.g., 10 bits per channel or more), allowing for more distinct colors to be displayed. HDR monitors may display a wider range of luminance levels. HDR content may include metadata that describes how to display content. HDR monitors may also support wider color spaces that can display more colors than a standard RGB color space. Such data may be additionally included as monitor configuration data, thereby resulting in a richer set of data. Further, the types and formats of data may vary depending on the monitor and/or an HDR standard it supports (e.g., HDR10, HDR10+, Dolby Vision, HLG, or the like).

As such, to accommodate the additional monitor configuration data associated with an HDR monitor, the enhanced protocol that may be used to communicate the monitor configuration may be adjusted to accommodate or support the additional data. For example, in conventional implementations, the RDP may include a limit of 4 blocks of 128 bytes (512 bytes) per monitor for communicating monitor configuration data. As monitor configuration data associated with an HDR may exceed such a size limit, the enhanced protocol may be adjusted to support a greater size limit that is suitable for conveying monitor configuration information (e.g., via an EDID blob or representation thereof). In this regard, the enhanced protocol may be adjusted to increase the monitor configuration data size or eliminate any monitor configuration data size limit. Further, the enhanced protocol is used to communicate monitor configuration data and, as such, does not communicate other initialization data, as such data is communicated via another channel and protocol (e.g., base RDP protocol).

Although generally described herein as using EDID, other data formats may additionally or alternatively be used to obtain and/or provide monitor configuration data. For example, in some embodiments, Display Identification Data (DisplayID) may be used. DisplayID is an alternative to EDID and provides similar functionality. DisplayID uses a more flexible and extensible data structure compared to EDID, thereby allowing for more detailed and comprehensive display information to be communicated. DisplayID also supports higher resolution, refresh rates, and color depths. Further, DisplayID supports dynamic configuration changes, enabling display devices to update their capabilities and settings dynamically based on changes in the display environment or user preferences.

In embodiments, the enhanced protocol further enables communication of global monitor configuration data and updated monitor configuration data. Global monitor configuration data refers to an entire set of monitor configuration data associated with a remote desktop session. Global monitor configuration data may refer to a snapshot of monitor configuration data associated with each monitor. Generally, as described herein, obtaining global monitor configuration data (e.g., at the remote desktop server 204) results in replacing a prior set of monitor configuration data for a remote desktop session with the new global monitor configuration data. In accordance with embodiments described herein, global monitor configuration data is generally provided in association with a new remote desktop session as initial monitor configuration data. In some cases, global monitor configuration data may also be provided as refreshed monitor configuration data, that is, after the remote desktop session has been established with initial monitor configuration data. For example, in cases in which a threshold number of monitor configuration data is updated, global monitor configuration data may be provided. Generally, providing a global monitor configuration data set results in a more expensive computation at the remote desktop server.

Updated monitor configuration data refers to a portion or subset of monitor configuration data that has been updated or modified in association with a remote desktop session. Updated monitor configuration data may refer to any attribute updated in association with a monitor or set of monitors in a remote desktop session. Such updates may include updates or modifications associated with a resolution, a display orientation, a monitor count (e.g., an addition of a monitor or a removal of a monitor), a monitor layout (e.g., display arrangement, positioning, or the like), a display scaling or dots per inch (DPI), color depth (e.g., 16-bit color to 24-bit color), display settings, refresh rate, display mode (e.g., mirror display modified to extended display configuration), and/or the like.

As such, in accordance with updating monitor configuration data at the remote desktop client device 202, the updated monitor configuration data may be communicated via the dynamic virtual channel 250. In this way, the dynamic virtual channel 250 may be used to communicate global monitor configuration data and updated monitor configuration data. Generally, obtaining updated monitor configuration data (e.g., at the remote desktop server 204) results in applying the updated monitor configuration data to the current monitor configuration data. As one example, the updated monitor configuration data may merge or aggregate with the existing monitor configuration data. As another example, the updated monitor configuration data may modify or replace the corresponding existing monitor configuration data. For example, assume the updated monitor configuration data represents a modification to a screen resolution. In such a case, the existing screen resolution may be replaced with the updated screen resolution. In accordance with embodiments herein, updated monitor configuration data is generally provided as refreshed monitor configuration data after a new remote desktop session has been initiated.

In embodiments, the remote desktop client device 202 may determine a type of monitor configuration data, such as global monitor configuration data and/or updated monitor configuration data, to communicate. As one example, the remote desktop client device 202 may communicate global monitor configuration data when initial monitor configuration data is being communicated (e.g., at initialization or establishment of a remote desktop session), and updated monitor configuration data when refreshed monitor configuration data is being communicated (e.g., after initial monitor configuration data is communicated and an update to monitor configuration data is detected). As another example, the remote desktop client device 202 may assess the amount or extent of modifications to monitor configuration data to determine whether to provide a set of global monitor configuration data or a set of updated monitor configuration data.

In embodiments, the remote desktop client device 202 may determine to communicate monitor configuration data. For example, based on a change to a monitor configuration, the remote desktop client device 202 may determine to communicate monitor configuration data, such as global monitor configuration data or updated monitor configuration data. In other cases, the remote desktop server 204 may initiate or prompt the remote desktop client device 202 to communicate monitor configuration data. For example, the remote desktop server 204 may request an update of monitor configuration data. As another example, the remote desktop server 204 may provide an update of monitor configuration data to the remote desktop client device 202. As such, regardless of whether a monitor configuration update originates from a client device or a server, such data may be provided via the dynamic virtual channel 250, and the enhanced protocol ensures a consistent display configuration.

As described herein, monitor configuration data (e.g., global monitor configuration data and/or updated monitor configuration data) may be communicated via the dynamic virtual channel 250 using an enhanced protocol. The enhanced protocol enables communication of HDR monitor data as well as communication of both global monitor configuration data and updated monitor configuration data.

In accordance with initializing the remote desktop session and providing monitor configuration data (e.g., via initial monitor configuration data in the form of global monitor configuration data), graphical data can be rendered for display on the remote desktop client device 202. In this regard, and at a high level, graphical output generated by applications running on the remote desktop server 204 is captured and encoded for transmission to the remote desktop client device 202. The graphical output is generated or adjusted to match the remote desktop client device's hardware in accordance with the monitor configuration data (e.g., resolution, screen layout, or the like. The remote desktop client device 202 receives the encoded graphical data and renders it on the local display. In this way, the user may be provided with control over the remote desktop, which is now an active remote desktop session within the operating system. The user can interact with the desktop environment, launch applications, access files, and perform tasks as if the user was physically present at the remote desktop server 204. In accordance with such interactions, the remote desktop client device may provide or transmit GUI elements, keyboard input, mouse movements, gestures, voice commands, and/or other user interactions between the client device and remote server. To the extent that monitor configuration data is updated and provided to the remote desktop server 204 (e.g., via updated monitor configuration data), the remote desktop server 204 may update the graphical output to match or correspond with the updated monitor configuration data.

With respect to the remote desktop server 204, the remote desktop server 204 includes a terminal service 210, a video driver 212, and a video encoding manager 214. As shown, the terminal service 210 corresponds with the session managing process components 218, which are generally configured to manage remote desktop sessions including performing user authentication, session creation, session management, and data transmission between the client and server during remote desktop sessions. The video driver 212 and the video encoding manager 214 correspond with the data acquisition process components 216, which are generally configured to manage data acquisition (e.g., acquire and encode data). In this regard, the data acquisition process components 216 include acquiring and encoding graphical data before the data is communicated to the terminal service 210.

The terminal service 210 communicates with the remote desktop client device 202 and manages remote desktop sessions. A remote desktop session generally refers to a period during which a user accesses and interacts with a remote desktop environment or applications on a remote computer from a client or local device. As can be appreciated, the terminal service 210 can manage multiple remote desktop sessions, for example, associated with multiple users.

The terminal service 210 includes an RDP stack 220, which may be loaded therein. The RDP stack 220 includes software components and protocols that implement and/or manage communication between a remote desktop client device 202 and the remote desktop server 204 (e.g., using enhanced protocol). The RDP stack 220 may be loaded at any time. In one embodiment, the RDP stack is loaded when a connection request is obtained, for instance, when a user attempts to initiate a remote desktop session. Although illustrated as an RDP stack, a remote access protocol stack of any configuration may be used.

In accordance with initializing the RDP stack 220, the RDP stack 220 listens for incoming data, such as connection requests, for example, from a remote desktop client device(s) and manages the communication between a remote desktop client device(s) and the remote desktop server 204. For instance, in association with a connection request, the RDP stack 220 may perform various tasks, such as authentication and session management. Once negotiation is successful and the connection is established, the RDP stack facilitates data transport between the remote desktop client device and the remote desktop server 204. For example, the RDP stack 220 may interact with the video driver 212 to transmit graphical data from the virtual desktop to the display of the remote desktop client device.

In embodiments, the RDP stack 220 may obtain monitor configuration data from the remote desktop client device 202. As described, such monitor configuration data may be in the form of global monitor configuration data and/or updated monitor configuration data. Generally, the monitor configuration data is communicated between the remote desktop client device 202 and the remote desktop server 204 via a dynamic virtual channel 250, irrespective of whether the monitor configuration data is communicated in an initial communication or a subsequent communication.

In some embodiments, the RDP stack 220 may include a transport 222 and a graphics provider 224, which may be initiated or instantiated at any time.

The transport 222 is generally configured to manage data communication between a remote desktop client device 202 and the remote desktop server 204. In this regard, when a remote desktop session is initiated (e.g., a user initiates a remote desktop session), the transport 222 manages communication, or data packet flow, between the remote desktop client device and the remote desktop server 204. The transport 222 may perform various tasks, such as packetization, encryption, compression, and/or ensuring reliable delivery of data (e.g., via packet acknowledgments, retransmissions, and/or flow control). The transport 222 can package the remote desktop protocol onto the underlying network protocol, such as Transmission Control Protocol (TCP) or User Datagram Protocol (UDP), for communication.

The graphics provider 224 is generally configured to facilitate display of graphical content on the remote desktop client device 202 during a remote desktop session(s). In some cases, the graphics provider 224 may be a Universal Windows Platform Remote Desktop Protocol (UWRDP) graphics provider. In some embodiments, the graphics provider 224 may obtain graphical data for transmitting to the remote desktop client device. For example, and as described herein, encoded graphical data may be provided to the graphics provider 224 (e.g., from a video encoder 240). In cases in which the graphics provider 224 obtains encoded graphical data, the graphics provider 224 may provide the encoded graphical data to the transport 222 for transmission over the network. In this way, the graphics provider 224 may manage efficient transmission of graphical data, such as screen updates, images, and video, between a remote desktop client device and the remote desktop server 204. In some cases, a graphics provider may encode graphical data generated on the remote desktop server 204 before the data is transmitted to the remote desktop client device 202. For example, a graphics provider may acquire unencoded graphical data from a video driver and encode the graphical data. In other cases, the graphical data is encoded in association with the data acquisition process (e.g., via the video encoding manager 214) and, as such, is not encoded in association with terminal service 210 (e.g., the RDP stack or the graphics provider). Accordingly, although the graphics provider 224 is illustrated, in some embodiments, the graphics provider 224 is not implemented and/or used.

As described, the terminal service 210 manages remote desktop sessions. In particular, the terminal service 210 may initiate a remote desktop session upon obtaining or receiving a connection request and/or establishing a connection. For example, in obtaining a connection request, the terminal service 210 may instruct the operating system of the remote desktop server 204 to initiate or start a remote desktop session (e.g., upon authentication). As such, the operating system of the remote desktop server 204 can initiate a remote desktop session in response to such an instruction from the terminal service 210. In initiating a remote desktop session, a video driver 212 is activated (e.g., via the operating system). The video driver 212 may interact with the operating system and capture the graphics or video output associated with the remote desktop session. In this regard, in initiating a remote desktop session, a video driver is activated to capture graphical information, which can be transmitted back to the client via the terminal service 210.

To facilitate graphical data encoding and/or data encapsulation in association with a video driver, or data acquisition process components, the terminal service 210 may generate and/or provide an encoding indicator to the video driver. As used herein, an encoding indicator generally indicates or provides an instruction related to graphical data encoding. An encoding indicator may include a video encoding manager identifier and/or a video encoder identifier. In embodiments, the terminal service 210 may provide (e.g., via the RDP stack) the encoding indicator to the video driver via input/output control (IOCTL). In this way, an IOCTL interface may be used to communicate with the video driver. The encoding indicator may instruct the video driver to load or utilize a particular video encoding manager and/or video encoder (e.g., using a video encoding manager identifier and/or a video encoder identifier, respectively).

In connection with obtaining monitor configuration data from the remote desktop client device 202, the terminal service 210 may communicate monitor configuration data to the video driver 212. As described, monitor configuration data may be obtained in accordance with establishing a connection (e.g., via an initial monitor configuration data) or in accordance with subsequent or updated monitor configuration data (e.g., via a refreshed monitor configuration data). The RDP stack 220 (e.g., via the graphics provider 224) may communicate the monitor configuration data (e.g., obtained from a remote desktop client device 202) to the video driver 212. In embodiments, the monitor configuration data may be received from the remote desktop client device in the form of a protocol data unit (PDU). A PDU generally refers to a unit of data specified in a protocol of a given layer in a network stack. Such a PDU may be a data packet including monitor configuration data to be processed, including monitor configuration data associated with multiple monitors and/or HDR monitors. In some cases, the monitor configuration data may include the entirety of the monitor configuration data in association with a monitor(s) for the remote desktop session. In other cases, the monitor configuration data may include only the updated monitor configuration data.

In some cases, the monitor configuration data is provided to the video driver 212 via IOCTL. IOCTL may include a control code to send commands to a video driver. As such, the RDP stack 220 may translate obtained monitor configuration data into a different format, for instance in the form of IOCTL, that is understandable by the video driver 212.

As described, the data acquisition process components 216 may obtain graphical data and provide graphical output (e.g., images or visual outputs) that can be displayed on a display screen. In accordance with embodiments described herein, the data acquisition process components 216 are performed using the video driver 212 and the video encoding manager 214. At a high level, the video driver 212 obtains graphical data and performs graphics processing, and the video encoding manager 214 manages encoding of the graphical data.

The video driver 212 is generally configured to obtain graphical data and, in some cases, process such data. To do so, the video driver 212 may communicate with the operating system and the graphics hardware (e.g., GPU) to manage graphics rendering and display management. In this way, the video driver 212 may facilitate communication between software and the display hardware.

In advance of obtaining graphical data, the video driver 212 may configure a virtual monitor(s) for a remote desktop session. A virtual monitor generally refers to a simulated display device that exists within the software framework of the remote desktop client or server. Virtual monitors may be created to provide customer display setups, tailored to preferences and/or requirements. A virtual monitor may be created and managed within the remote desktop software. For example, the video driver may communicate with the operating system to create the virtual monitor, including registering the virtual monitor with the operating system and providing an interface for rendering graphics to the virtual monitor.

In embodiments, a virtual monitor(s) may be configured using the obtained monitor configuration data. In this way, as monitor configuration data is obtained (e.g., via the RDP stack 220), the video driver 212 may use such data, or a portion thereof, to configure one or more virtual monitors (e.g., in association with the monitor configuration data).

Configuring a virtual monitor may facilitate understanding of the capabilities of the remote desktop client device 202. In particular, in setting up or configuring a virtual monitor, the virtual monitor can be configured to emulate various display capabilities, such as HDR capabilities. This allows the operating system and/or other applications or components of a remote desktop server to behave as if interfacing with a real monitor that supports these features. The operating system and/or applications or components may understand and take advantage of the remote desktop client device's display capabilities. For example, configuring a virtual monitor can provide information to the operating system such that the operating system understands capabilities (e.g., HDR capabilities) associated with the remote desktop client device. In this regard, in cases in which the monitor configuration data indicates HDR capabilities, the operating system, or other components of the remote desktop server 204, may recognize that the remote desktop client can support a specific type of video data, such as HDR video data.

As described, the virtual monitor may be created or updated based on the monitor configuration data. Such monitor configuration data may be of any type or amount. Various examples of types of monitor configuration data may include configuration mode, display mode, scale factor, physical size, colorimetry, SDR white level, monitor description, container information, and/or the like. As described, in some cases, the global monitor configuration data may be obtained. In other cases, updated monitor configuration data may be obtained.

In cases in which global monitor configuration data is obtained, the video driver 212 may use the global monitor configuration data to configure or generate a virtual monitor. In this way, the video driver 212 may create a new virtual monitor that matches the global monitor configuration data, thereby ensuring that the display is rendered appropriately according to the monitor configuration data. In cases in which global monitor configuration data is obtained as refreshed monitor configuration data (e.g., a virtual monitor already exists), the video driver 212 may tear down the prior virtual monitor set up, effectively deleting or disabling the existing virtual monitor. The video driver 212 may then use the new global monitor configuration data to create a new virtual monitor. As can be appreciated, the global monitor configuration data may provide an entirely new set of configuration data or may include portions of modified configuration data, such as monitor removal/addition, resolution changes, layout changes, or the like. The video driver 212 effectively refreshes the virtual monitor setup in its entirety to match the new monitor configuration data. Such a complete reconfiguration using the global monitor configuration data is generally performed dynamically during a remote desktop session, without requiring disconnection from the remote desktop session. As can be appreciated, as the global monitor configuration data may include data associated with multiple monitors, multiple virtual monitors may be generated or configured.

In cases in which updated monitor configuration data is obtained, the video driver 212 may use the updated monitor configuration data to configure a virtual monitor. In this way, the video driver 212 may update an existing virtual monitor to match the updated monitor configuration data, thereby ensuring that the display is rendered appropriately according to the monitor configuration data. In cases in which updated monitor configuration data is obtained as refreshed monitor configuration data (e.g., a virtual monitor already exists), the video driver 212 may determine aspects of the virtual monitor to modify or update. Such a determination may be made by, for instance, analyzing the updated monitor configuration data obtained at the video driver 212 to identify the type of data. As another example, the updated monitor configuration data may be compared to existing monitor configuration data previously used to configure a virtual monitor. In accordance with identifying the type of monitor configuration data to update, the video driver 212 can facilitate updating or modifying the existing virtual monitor in accordance with the received updated monitor configuration data.

In embodiments, a monitor identifier may be obtained in association with the monitor configuration data and used to facilitate updating a virtual monitor(s). For example, an enhanced protocol may include a monitor identifier that is, for instance, 128 bits to uniquely identify the monitor. As such, the monitor identifier may be used to identify or recognize which virtual monitor to update with the corresponding modified configuration data. For instance, assume that three virtual monitors exist (e.g., based on initial monitor configuration data). Further assume that a resolution is modified in association with a particular virtual monitor and that the updated resolution is provided in association with an identifier for the particular virtual monitor via the enhanced protocol. In such a case, the monitor identifier may be recognized and used to identify the corresponding virtual monitor for which to update the resolution.

To obtain or identify the monitor configuration data, from either global monitor configuration data or updated monitor configuration data, the video driver 212 may parse the monitor configuration data (e.g., received via IOCTL 270) and extract monitor configuration data, such as display resolution, refresh rate, color depths, and/or other parameters supported by the corresponding monitor.

The video driver 212 may identify whether the data corresponds with a global monitor configuration data or updated monitor configuration data in any number of ways. As one example, the enhanced protocol may include an indication of the type of monitor configuration data. For example, an identification of global monitor configuration data or updated monitor configuration data may be provided in association with the monitor configuration data provided via the enhanced protocol.

In accordance with configuring a virtual monitor by generating a new virtual monitor (e.g., using global monitor configuration data) or updating a virtual monitor (e.g., using updated monitor configuration data), the virtual monitor (or an indication of its existence) and/or configurations associated therewith may be provided to the operating system, GPU, or another component of the remote desktop server. Providing such information enables the operating system, GPU, or other component(s) to recognize the data (e.g., video data) the remote desktop client device can support. For example, assume the virtual monitor is configured to support HDR capabilities. In such a case, providing configurations indicating HDR capabilities to the operating system and GPU enables recognition that the remote desktop client device can support HDR video data.

In some embodiments, the video driver 212 facilitates rendering of visual content (e.g., images) for display on the screen. As such, the video driver 212 may translate high level graphics commands into instructions that the GPU or CPU can understand and execute. Such instructions may relate to colors, positions, transformations, layout details, or the like. In this way, the video driver 212 may communicate or interface with a graphics subsystem (e.g., GPU and/or CPU), which performs the rendering, to ensure correct display on monitors. For example, the GPU may process the rendering instructions provided by the video driver and may generate actual pixel data for the final image. Such data may include the rendered frame, which includes pixel values representing color, depth information, and any additional rendering effects applied during the process (e.g., lighting, shadows, anti-aliasing, or the like). The rendered frame, or a surface(s), is the visual output of the rendering process, representing what the user may view on the screen. The rendered data (e.g., frame[s]) can then be returned to the video driver 212 for processing and/or communicating, for example, to the video encoding manager 214. For example, the video driver may take the rendered frame data (e.g., via a frame buffer) and prepare it for display (e.g., performing color space conversion, scaling, gamma correction, and/or other adjustments to ensure compatibility with the display hardware and settings). The graphical data (e.g., in the form of the rendered output or data processed therefrom) may then be communicated from the video driver (e.g., to the video encoding manager 214). The video driver 212 may perform various functionalities, such as, for example, creating the graphics adapter representing the indirect display device; reporting connected and disconnected monitors; providing descriptions of connected monitors and available display modes; supporting other display functionality like a hardware mouse cursor, gamma, I2C communications, and protected content; handling the desktop image processing for display; and implementing UMDF functionality such as device communications, power management, and plug-and-play technology.

As described, various components of the remote desktop server 204 may use the virtual monitor configurations based on obtained monitor configuration data to render visual content. In some examples, the operating system and/or the GPU are used to render data. The operating system may recognize the virtual monitor as a display device and include the virtual monitor in its display configuration alongside physical monitors. A graphical user interface environment (e.g., windowing systems, such as Windows, macOS, or X11) may manage the placement and rendering of graphical elements on the virtual monitor. The operating system may recognize the virtual monitor as an independent display surface, allowing applications to render their content to it using standard graphics APIs (such as DirectX or OpenGL). The GPU may perform the rendering of graphical data for the virtual monitor. Graphics commands may be communicated to the GPU, specifying what needs to be rendered on the virtual monitor. These commands may be processed by the GPU, which may perform necessary calculations and render the final images. The GPU may interact with the virtual display buffer associated with the virtual monitor, and the rendered graphics data may be written to this buffer. The GPU can ensure that the rendered content conforms to the specifications of the virtual monitor, including its resolution, color depth, refresh rate, HDR-related data, or other data. The operating system and GPU may continue to render and update the content of the virtual monitor as needed, ensuring that the remote desktop client device receives an accurate representation of the virtual monitor's display.

In some cases, using the virtual monitor configurations, the GPU may prepare the graphical data in an HDR format that represents eight bytes per pixel. The GPU may process graphics commands, such as commands related to rendering 3D scenes, drawing 2D graphics, or composing graphical elements for display. As part of such processing, the GPU may convert graphical data into a format suitable for rendering and display. In this regard, the GPU may process rendering commands, taking into account the HDR settings of the virtual monitor. For example, the GPU may perform color space conversion, pixel format conversion, and/or texture mapping. In this regard, the GPU may process and prepare graphical data, including organizing pixels, as part of the graphics rendering pipeline. For instance, the GPU may perform calculations to accurately represent the wide color range and luminance levels of HDR content. For HDR data, the pixels may be organized with 8 bytes (or greater) per pixel to represent higher dynamic range and color depth characteristics of HDR images. As such, the HDR data may include greater precision, thereby enabling more detailed representations of bright highlights and deep shadows, for example.

In one embodiment, the video driver 212 is in the form of an indirect display driver (IDD) or a remote desktop protocol indirect display driver (also referred to as RDPIDD). An IDD or RDPIDD is generally implemented in cases in which monitors are indirectly connected. An IDD is used when rendering occurs indirectly, such as when using remote desktop services. In particular, graphics rendering occurs at the remote desktop server, but the output is displayed on a local remote desktop client device. An IDD or a RDPIDD may serve as a user-mode driver for the indirect display device. In embodiments, an IDD or RDPIDD may create a graphics adapter representation for the indirect display, report connected and disconnected monitors, provide monitor descriptions and available display modes, or the like.

In some cases, a video driver 212 in the form of an RDPIDD operates within the framework provided by a Windows Device Driver Model (WDDM). Stated differently, the RDPIPP is a subsystem of the WDDM. The WDDM provides a standardized interface between display drivers (e.g., user-mode device drivers) and the operating system. In some cases, a video driver 212, such as an RDPIDD, is implemented via a public API (e.g., Independent Display Driver for Console Extensions [IDDcx]).

In some embodiments, a video driver 212, such as an IDD, is implemented as a DLL. A DLL includes code and functions that facilitate tasks performed by the video driver 212, such as obtaining graphical output and managing display-related tasks within a remote desktop session.

In accordance with embodiments herein, the video driver 212 obtains unencoded (e.g., raw) graphical data (e.g., rendered data). In some embodiments, unencoded graphical data is obtained from a rendering component (e.g., GPU and/or operating system) of the remote desktop server 204. The video driver 212 may capture unencoded graphical data from the rendering component for a particular session. For example, for a user at a remote desktop client device, the rendering component may provide data to the video driver 212 in association with the particular remote desktop session associated with the user. In some cases, the video driver 212 obtains unencoded graphical data by intercepting graphical data generated or output by a component running on the remote desktop server's environment. The unencoded graphical data may be obtained via a frame buffer in a real-time manner. In this way, graphical data may be obtained as the data is rendered. Such graphical data may include windows, icons, dialog boxes, and/or any other graphical element produced by applications. In some cases, the video driver 212 is also configured to manage various processing tasks, such as display-related tasks, within the remote desktop session. For example, the video driver 212 may manage tasks such as screen resizing, color depth adjustments, and cursor handling.

As described herein, in some cases, monitor configurations associated with HDR capabilities or HDR virtual monitor(s) may be provided to the operating system and/or other rendering components. In such a case, the graphical data obtained at the video driver 212 may be in the form of HDR video data for presentation to a remote desktop client device, as the graphical data may be rendered in accordance with the indicated HDR configurations. HDR graphical data may include image or video content that contains a wider range of brightness levels and color depth compared to SDR content. In embodiments, the HDR graphical data is generated or rendered in a format that includes eight bytes per pixel.

In some implementations, video encoding occurs in association with the video driver 212. In this way, in some embodiments, the video driver 212 may perform video encoding in association with the graphical data. Video encoding refers to the process of encoding graphical data, including video as well as other visual elements displayed in association with a remote desktop. For example, video encoding may include encoding various types of graphical data generated by applications running on the remote desktop server, such as text, images, icons, videos, windows, and other visual elements.

In other implementations, the video driver 212 communicates with the video encoding manager 214, or a portion thereof (e.g., a video encoder), to facilitate graphical data encoding. In particular, the video driver 212 may provide the unencoded graphical data (e.g., HDR graphical data) to the video encoding manager 214. In this way, the graphical data encoding occurs in association with the same data acquisition process components 216 and, as such, may avoid the synchronization and copying of the unencoded data to the RDP stack, as required in conventional implementations.

In some cases, the video driver 212 identifies or determines a video encoding manager 214 and/or video encoder 240 with which to communicate. In this regard, the video driver 212 may identify which video encoding manager 214 and/or video encoder 240 to provide with graphical data for encoding. For example, in some cases, multiple video encoding managers 214 may exist (e.g., for different remote desktop sessions or for different users). As another example, multiple video encoders may exist in association with a video encoding manager (e.g., to perform different encoding techniques). A particular video encoding manager 214 and/or video encoder 240 may be identified in association with the video driver 212. For example, the video driver 212 may have a video encoding manager identifier and/or video encoder identifier hard-coded to indicate a desired video encoding manager and/or video encoder. As another example, the video driver 212 may identify monitor configuration data indicating an HDR virtual monitor and, as such, identify an HDR video encoder. In other examples, an encoding indicator may be received or obtained at the video driver 212 indicating a desired video encoding manager and/or video encoder. For instance, an encoding indicator may be generated and/or provided from the terminal service 210 (e.g., based on an instruction from a remote desktop client device or based on identifiers hard-coded in association with the terminal service or RDP stack) to the video driver 212 indicating a video encoding manager identifier and/or a video encoder identifier for use in performing graphical data encoding. A video encoding manager identifier provides an identification or indication of a particular video encoding manager to load and/or utilize, for example, in association with a remote desktop session. A video encoder identifier provides an identification or indication of a particular video encoder to load and/or utilize, for example, in association with a remote desktop session. In some examples, the encoding indicator is provided from the terminal service 210 via IOCTL 270. Based on the encoding indicator, the video driver 212 may communicate or direct graphical data accordingly. In some cases, upon the video driver obtaining the encoding indicator (e.g., via IOCTL at the beginning of a remote desktop session), the video driver 212 may initiate loading of the desired video encoding manager 214 and instantiate the video encoder 240 for encoding HDR graphical content.

To communicate with the video encoding manager 214, in some cases, the video driver 212 communicates via an interface, such as encoding interface 230. Encoding interface 230 facilitates a logical separation between video driver 212 and the video encoding manager 214, and tasks associated therewith. In some cases, the encoding interface 230 packages the graphical data obtained from the operating system in a different manner that is suitable to the video encoding manager 214, and/or video encoder(s) 240 associated therewith.

Video encoding manager 214 is generally configured to manage graphical data encoding, such as graphical data encoding performed by video encoder 240. At a high level, the video encoding manager 214, and/or a video encoder 240 associated therewith, obtains unencoded graphical data (e.g., raw frames) and applies an encoding technique to encode the graphical data for more efficient transmission to a remote desktop client device. In some embodiments, the video encoding manager 214 and/or video encoder 240 may also perform data encapsulation. The video encoding manager 214 and/or video encoder 240 may be initiated in any of a number of ways. In some cases, the video encoding manager 214 and/or video encoder 240 are initiated in conjunction with initiation of the video driver 212. For example, in association with a plug-and-play component identifying to initiate the video driver 212, the video encoding manager 214 and/or video encoder 240 may also be initiated or loaded. As one example, based on a plug-and-play component detecting a display device and identifying to initiate the video driver 212, the WDDM may manage display-related tasks, including loading (e.g., into memory) the video driver 212, the video encoding manager 214, and/or a video encoder 240. In other cases, the video driver 212 (e.g., upon being initiated) may initiate or load the video encoding manager 214 and/or a video encoder 240. For instance, based on an encoding indicator (e.g., including a video encoding manager identifier and/or a video encoder identifier) obtained from the terminal service 210 (via an IOCTL interface), the designated video encoding manager and/or video encoder may be initiated or loaded. By way of example, assume a remote desktop client device has an HDR monitor. In such a case, the remote desktop client device can provide such an indication to the RDP stack 220, which can communicate such an attribute in association with a remote desktop session. Accordingly, the video driver 212 may identify that encoding is desired to be performed in association with the video encoder 240. The video encoder 240 can then be loaded or instantiated and graphical data provided thereto for encoding.

In some cases, the video encoding manager 214 may be in the form of a DLL. A DLL refers to a file format, which may be used to hold multiple codes and procedures. A DLL allows for code to be shared among different programs, which can reduce disk space and memory usage. Further, a DLL may facilitate a more efficient management and updating of code. Using a DLL that is logically separated from the video driver, or DLL associated therewith, facilitates development of software (e.g., third-party software) that extends or enhances the encoding functionality without requiring modifications to the core video driver itself. As such, a DLL associated with a video driver 212 and a DLL associated with a video encoding manager 214 may be logically separate.

In some cases, the video encoding manager 214 may determine or select a video encoder to use. As shown, the video encoding manager 214 includes video encoder 240, such as an HDR video encoder. Although not illustrated, additional or alternative video encoders may be included or initiated in association with the video encoding manager 214.

A video encoder 240, such as an HDR video encoder, generally refers to a component that performs encoding of graphical data. In this way, a video encoder may convert graphical data from one format to another to compress it for storage or transmission purposes. By incorporating video encoders into a video encoding manager (e.g., a DLL), a developer can modularize the encoding functionality, making it easier to manage and integrate into different software applications.

A video encoder 240 may perform encoding in a particular manner. As such, various video encoders may exist that perform different techniques or manners of encoding graphical data. For example, an HDR video encoder generally encodes HDR content into a compressed video format. HDR refers to a technology that allows for a wider range of luminance levels and color gamut compared to SDR content, resulting in more vibrant and lifelike images. One example of an HDR encoder is an H.265 High-Efficiency Video Coding 444 (HVEC444). An HDR encoder applies compression techniques to reduce the size of the HDR content while preserving its HDR characteristics. Although not illustrated, other examples of video encoders may include an H.264 video encoder, an H.265 video encoder, and a UMRDP video encoder.

In some cases, to determine or select a video encoder to use, such as an HDR video encoder, the video encoding manager 214 may utilize an encoder indicator, for example, that specifies a video encoder. An encoder indicator generally indicates or provides an instruction related to graphical data encoding. For example, the encoder indicator may instruct the video driver to load and/or use a particular video encoding manager and/or video encoder (e.g., using a video encoding manager identifier and/or a video encoder identifier, respectively). In this regard, an encoding indicator may include a video encoding manager identifier and/or a video encoder identifier. In embodiments, the terminal service 210, such as the RDP stack 220, may provide the encoding indicator to the video driver, for example, via IOCTL 270. The encoder indicator, or data associated therewith, can then be provided to the video encoding manager 214, for example, for use in selecting a video encoder, such as an HDR video encoder, to use to encode graphical data.

The video encoder 240 encodes graphical data, such as HDR graphical data obtained or output by video driver 212. For example, the video driver 212 may obtain and/or generate graphical output, such as images, GUI elements, and text rendered in specific fonts, understandable by the graphics hardware. Generally, graphical data is typically encoded using video compression techniques, such as Remote FX or H.264. As such, the video encoders described herein generally encode using video compression techniques. Such compression algorithms reduce the size of the graphical data for efficient transmission over the network, thereby optimizing performance and responsiveness during remote desktop sessions. In some cases, however, it may be desirable to convert the graphical output into a text-based representation. For example, character encoding for transmitting textual data and control messages may be performed. As such, an encoding process may, in some cases, encode the graphical data into a sequence of characters using a specific character encoding (e.g., UTF-8). Text-based characters can be used to represent graphical elements, including lines, boxes, and symbols. The remote desktop client display can interpret the encoded characters and displays them on the screen. For example, the remote desktop client device may map the encoded graphical elements back to their visual representations. The remote desktop client's display capabilities may determine how accurately the original graphics are represented.

In embodiments, the video encoder 240 may obtain monitor configuration data. For example, the video driver 212 may provide monitor configuration data to the video encoder 240. The video encoder 240 may use the monitor configuration data to facilitate graphical data encoding. For example, graphical data to encode may correspond with monitor context (e.g., as each monitor may function independently from one another). As such, the video encoder 240 may encode the graphical data per monitor instance. In this way, the video encoder may use monitor configuration data to optimize the encoding process and/or improve the viewing experience.

By way of example only, the video encoder can use monitor configuration data to determine an optimal or preferred resolution and aspect ratio for encoding the video. By matching the output resolution and aspect ratio to the native resolution and aspect ratio of the monitor, the encoder ensures that the video will be displayed without distortion or letterboxing. As another example, monitor configuration data may include information about the supported color space and gamut of the display. The video encoder can use this information to ensure that the video is encoded using the appropriate color space and gamut for accurate color reproduction on the monitor. As yet another example, the video encoder can use monitor configuration data to detect HDR capabilities and adjust the encoding settings accordingly. This may include encoding the video with HDR metadata and using HDR-specific compression techniques to preserve the dynamic range of the content. Further, the video encoder may take into account the refresh rate of the monitor when encoding the video. By matching the frame rate of the video to the refresh rate of the monitor, the video encoder can ensure smooth playback without dropped frames or stuttering. Monitor configuration data may also include information about the supported bit depth and chroma subsampling formats. The video encoder may use such information to determine the optimal encoding settings for preserving image quality while minimizing file size.

In accordance with encoding graphical data, the encoded graphical data is communicated to the terminal service 210 for providing to the remote desktop client device 202. In particular, the encoded graphical data may be communicated to the RDP stack 220 of the terminal service 210 for providing to the remote desktop client device 202.

The encoded graphical data may be communicated to the RDP stack 220 of the terminal service 210 in a number of ways. In one embodiment, the encoded graphical data is provided to the video driver 212 for providing to the RDP stack 220 (e.g., the transport 222 of the RDP stack). As one example, the video driver 212 may communicate the encoded graphical data using file Input/Output (file I/O) 280. File I/O generally refers to the process of reading from and writing to files on a computer's storage system (e.g., in an asynchronous manner). File I/O may be used to extract encoded graphical data (e.g., frames). In some cases, file I/O opens a channel directly to the video driver, providing greater control over data reads and writes.

Although file I/O is provided as an example, other delivery mechanisms may be used between the video driver 212 and the RDP stack 220. For example, encoded graphical data (e.g., frames) may be communicated using named pipes or dynamic virtual channels. As another example, a direct connection (e.g., TCP connection) may be used to communicate encoded graphical data to the RDP stack 220. Any of such delivery mechanisms from the video driver 212 to the RDP stack 220 reduces resources utilization otherwise needed to perform copying and synchronization tasks.

In another embodiment, although not illustrated, encoded graphical data may be provided directly from the video encoding manager 214, or the video encoder 240, to the RDP stack 220. For instance, communication between a video encoder and RDP stack 220 may occur using an RDP surface and an update channel. In implementations using an RDP surface and/or an update channel, although data is copied, the data is encoded. As such, resource utilization is reduced by synchronizing and copying encoded graphical data.

In receiving the encoded data, the RDP stack 220 provides the encoded graphical data to the remote desktop client device 202. The remote desktop client device 202 receives the encoded graphical data (e.g., frames), decodes the data, and presents via a display of the remote desktop client device. As the graphical data encoded may be HDR graphical data, the remote desktop client device may present the HDR graphical data via a display device.

As described, embodiments herein include an enhanced protocol for communicating monitor configuration data in an efficient and effective manner. The enhanced protocol may be used to communicate monitor configuration data, such as global monitor configuration data and updated monitor configuration data, via a dynamic virtual channel. Such a dynamic virtual channel serves as an exclusive communication path for monitor configuration-related messages. Streamlining monitor configuration traffic into a single channel facilitates a more efficient and consistent management of monitor configuration data and enables both client and server devices to initiate and propagate monitor configuration changes. Further, the dynamic virtual channel enables communication of both initial monitor configuration data and refreshed monitor configuration data to ensure smooth handling of monitor configuration setups during a remote desktop session initiation and ongoing changes during a remote desktop session.

The enhanced protocol may include utilization of packed structures to represent various aspects of monitor configuration, such as resolution, color modes, and HDR settings. Such structures ensure that monitor configuration data is transmitted efficiently and accurately. Further, such structures can be added as needed or appropriate. In this way, a PDU may contain any of the packed data structures as appropriate and need not include each data structure. For example, a PDU for a global set of monitor configuration data may include different data structures than a PDU for an updated set of monitor configuration data. As another example, a PDU associated with an HDR monitor may include different data structures (e.g., colorimetry, SDR white level, or the like) than a PDU associated with a non-HDR monitor.

The enhanced protocol may support various PDU types. By way of example only, the enhanced protocol may support capability advertisements, configuration requests, and/or notifications. Such PDUs may manage the communication between a client and a server, ensuring that monitor configuration data is correctly interpreted and applied. The capability advertisements generally refer to communications to perform capability negotiations. The configuration request generally refers to communications in which the server requests monitor configuration data. The notification generally refers to communications in which monitor configuration data is provided.

An enhanced protocol may include basic type structures that may be used to represent points, regions, or other data. For example, a data structure may provide a representation of a point or an offset with signed coordinates in a two-dimensional space, such as a point or an offset with non-negative coordinates in a two-dimensional space. As another example, a data structure may provide a representation of a rectangle with signed coordinates in a two-dimensional space. As yet another example, a data structure may provide a representation of a fractional value that represents vertical and horizontal frequencies of a video mode, that is, vertical sync and horizontal sync. As another example, a data structure may provide a representation of a local identifier for an adapter. As yet another example, a data structure may provide a representation of a 128-bit unique identifier.

The enhanced protocol may also include a set of data structures (e.g., packed structures) to encapsulate various monitor configuration parameters. Such structures may efficiently represent key monitor characteristics and settings during communication between a remote desktop protocol client device and a remote desktop server. Each structure may serve a specific role in transmitting data about monitor resolution, orientation, color settings, HDR support, and the like. By packing these structures, the protocol ensures minimal overhead while maximizing data throughput and integrity, which is particularly valuable in remote desktop environments in which bandwidth and latency are important.

Various configuration structures and types may be used in association with the enhanced protocol to encapsulate various monitor configuration parameters. As one example, a data structure may provide a representation of a set of supported monitor configuration packed structures. As another example, a data structure may provide a representation of a set of possible monitor orientations. As yet another example, a data structure may provide a representation of a set of possible monitor color modes. As yet another example, a data structure may provide a representation of a set of supported color depths in bits. In some cases, a data structure may provide a representation of a set of supported monitor color spaces and EOTF capabilities. A data structure may provide a representation of a set of types of monitor description blobs. As another example, a data structure may provide a representation of a structure that describes how many bits per component can be used to send pixels of each format to a monitor. A data structure may also provide a representation of a set of actions to be performed with monitor information. A data structure may provide a representation of a structure that describes the mode to which a virtual monitor should be switched. A data structure may also provide a representation of a structure that describes monitor scale factors. Further, a data structure may provide a representation of a structure that describes the physical size of the remote desktop client device's monitor. In some cases, such a structure may only be applied during virtual monitor creation. A data structure may provide a representation of a structure that describes colorimetry parameters that can override default parameters. In some instances, a data structure may provide a representation of a structure that describes monitor SDR white level when in HDR model. A data structure may provide a representation of a structure that contains a monitor description blob. In some cases, a data structure may provide a representation of a host adapter information relevant for containers. In embodiments, such a data structure may be a private structure. A data structure may provide a representation of defining a unique 128-bit monitor identifier. In some cases, a data structure may provide a representation of a monitor configuration structure, which may be followed by configuration packed structures.

An enhanced protocol may include protocol PDU structures. As such, a data structure may provide a representation of monitor configuration command identifiers. A data structure may provide a representation of a structure that represents the header for PDUs. Such a data structure may contain metadata that is used to interpret the contents of the PDU. In some cases, a data structure may provide a representation of a structure that represents the capability advertisement PDU. A data structure may provide a representation of a structure that represents the capability confirmation PDU. A data structure may provide a representation of types of monitor configuration. In some cases, a data structure may provide a representation of a structure used to set the virtual monitor(s) configuration. A data structure may provide a representation of a monitor configuration that the server takes into effect. Such a notification can be sent in response to a command or message associated with setting up monitor configurations or in case the server decides to alter the monitor configuration. A data structure may provide a representation of a request that the server can send to the client to obtain the latest monitor configuration. The client may respond with monitor configurations.

In embodiments, a PDU used to send monitor configuration data updates may include a header and transaction identifier. The monitor configuration type may indicate whether the monitor configuration data is global monitor configuration data (also referred to herein as Major or 0 value) or updated monitor configuration data (also referred to as Incremental or 1 value). The PDU may also include multiple packed structures that represent the details of the virtual monitors, such as display modes, physical size, scaling factors, and other parameters. In cases in which multiple monitors exist, a configuration for each monitor may be provided in the same PDU.

### Exemplary Implementations for Facilitating Efficient Management of Monitor Configuration Data in a Remote Desktop Environment

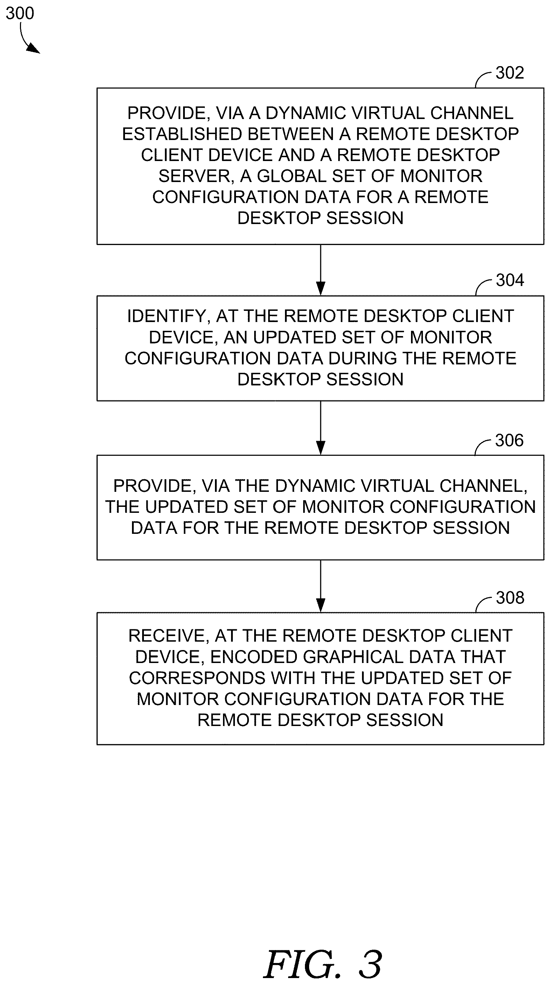

As described, various implementations can be used in accordance with embodiments described herein. FIGS. 3-5 provide example methods of facilitating efficient management of monitor configuration data in a remote desktop environment. Methods 300, 400, and 500 can be performed by a computer device, such as device 600 described below. The flow diagrams represented in FIGS. 3-5 are intended to be exemplary in nature and not limiting.

Turning initially to method 300 of FIG. 3, method 300 is directed to facilitating efficient management of monitor configuration data in a remote desktop environment, in accordance with embodiments of the present technology. Initially, at block 302, a global set of monitor configuration data for a remote desktop session is provided via a dynamic virtual channel established between a remote desktop client device and a remote desktop server. In embodiments, the global set of monitor configuration data comprises an entire set of monitor configuration data associated with a layout of monitors associated with the remote desktop session. In this regard, all monitor configuration data associated with each monitor associated with a remote desktop client device is communicated as global monitor configuration data. In some embodiments, the global monitor configuration data corresponds with one or more HDR monitors.

At block 304, an updated set of monitor configuration data during the remote desktop session is identified at the remote desktop client device during the remote desktop session. In embodiments, an updated set of monitor configuration is a portion of monitor configuration data associated with an updated corresponding with a particular monitor of the layout of monitors associated with the remote desktop session.

At block 306, the updated set of monitor configuration data for the remote desktop session is provided via the dynamic virtual channel. In embodiments, the updated monitor configuration data is provided to a remote desktop server and only includes the data that is updated rather than all of the monitor configuration data for the corresponding monitor and/or all monitors of the remote desktop session. For example, if a resolution of a monitor is modified, the resolution update is provided while other monitor configuration data associated with the monitor is not provided. As another example, if a new monitor is added, the configuration data associated with the new monitor is provided while configuration data associated with other monitors in the layout is not provided. In accordance with the remote desktop server obtaining the updated set of monitor configuration data, the updated set of monitor configuration data may be provided by a remote access protocol stack of the remote desktop server to a video driver of the remote desktop server for configuring virtual monitors corresponding with the updated set of monitor configuration data. In some cases, the virtual monitors corresponding with the updated set of monitor configuration data is identified based on monitor identifiers included in an enhanced protocol used to provide the updated monitor configuration data. In this way, the monitor identifiers corresponding with the updated monitor configuration data may be used to identify which virtual monitors to update with the updated monitor configuration data.

At block 308, encoded graphical data that corresponds with the updated set of monitor configuration data for the remote desktop session is received at the remote desktop client device. In this regard, the updated set of monitor configuration data may be used to reconfigure a virtual monitor, which may be used to generate the graphical data that is encoded and communicated to the remote desktop client device.

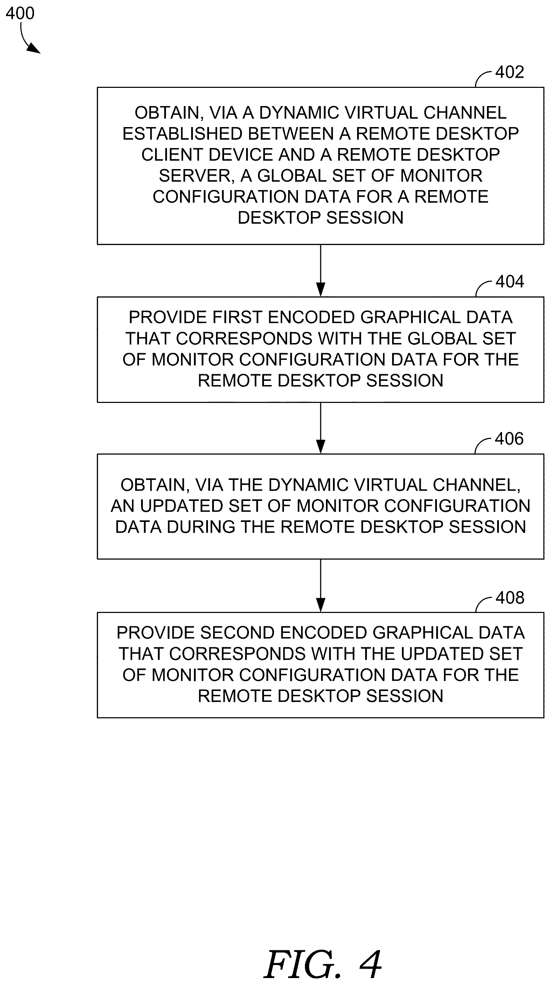

Turning to method 400 of FIG. 4, method 400 is directed to facilitating efficient management of monitor configuration data in a remote desktop environment, in accordance with embodiments of the present technology. Initially, at block 402, a global set of monitor configuration data for a remote desktop session is obtained via a dynamic virtual channel established between a remote desktop client device and a remote desktop server. In some embodiments, the global set of monitor configuration data includes all data associated with each monitor associated with a remote desktop client device of a remote desktop session. The global monitor configuration data may include an indication of a configuration mode, a display mode, a scale factor, a physical size, a colorimetry, an SDR white level, a monitor description, and/or container information.

At block 404, the first encoded graphical data that corresponds with the global set of monitor configuration data for the remote desktop session is provided. In this way, content may be displayed at the remote desktop client device monitor(s) in accordance with the global set of monitor configuration data.

At block 406, an updated set of monitor configuration data is obtained, via the dynamic virtual channel, during the remote desktop session. The updated set of monitor configuration data includes data associated with the updates to the monitor, rather than all the data associated with the monitor. In this regard, the updated set of monitor configuration data may include an indication of a modification of an attribute of a particular monitor of a plurality of monitors associated with the remote desktop session. In some embodiments, the updated set of monitor configuration data is obtained at a remote access protocol stack of the remote desktop server and provided to a video driver of the remote desktop server for configuring one or more virtual monitors corresponding with the updated monitor configuration data. Such virtual monitors may be identified based on monitor identifiers included in an enhanced protocol used to provide the updated monitor configuration data.

At block 408, the second encoded graphical data that corresponds with the updated set of monitor configuration data for the remote desktop session is provided. In some embodiments, the second encoded graphical data is generated based on graphical data, such as HDR graphical data, obtained at a video driver of the remote desktop server in accordance with configuring one or more virtual monitors using the updated monitor configuration data.

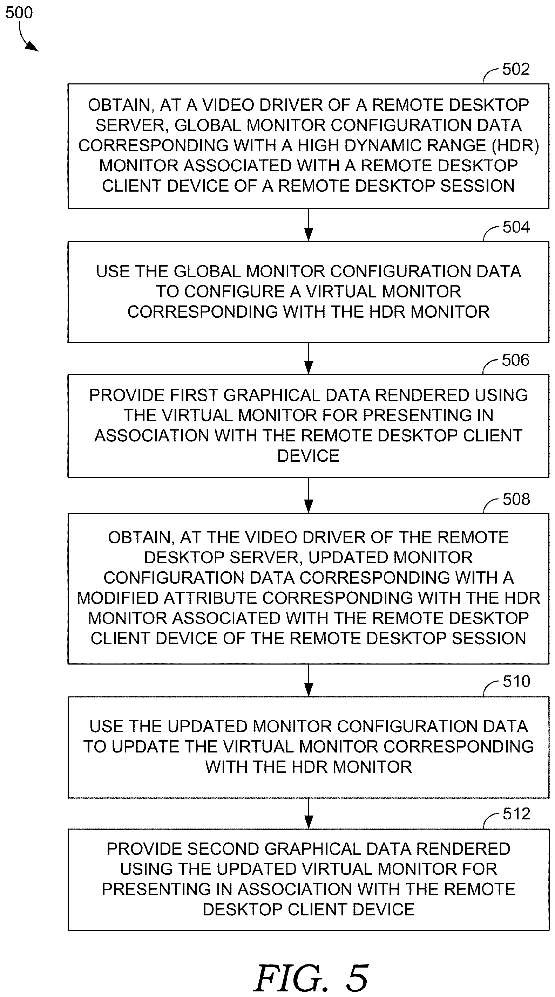

Turning to method 500 of FIG. 5, method 500 is directed to facilitating efficient management of monitor configuration data in a remote desktop environment, in accordance with embodiments of the present technology. Initially, at block 502, global monitor configuration data corresponding with a high dynamic range (HDR) monitor associated with a remote desktop client device of a remote desktop session is obtained at a video driver of a remote desktop server. In embodiments, the remote desktop client device identifies and provides the global monitor configuration data to the remote desktop server. In some cases, the global monitor configuration data is obtained as initial monitor configuration data via a dynamic virtual channel using an enhanced protocol.

At block 504, the global monitor configuration data is used to configure a virtual monitor corresponding with the HDR monitor. In one embodiment, the virtual monitor to configure is identified based on a monitor identifier associated with the HDR monitor communicated via the enhanced protocol used to communicate the updated monitor configuration data. Such an enhanced protocol may indicate that the configuration data type is global monitor configuration data.

At block 506, the first graphical data rendered using the virtual monitor for presenting in association with the remote desktop client device is provided. In this way, the remote desktop client device may present the graphical data via a monitor associated therewith.

At block 508, updated monitor configuration data corresponding with a modified attribute corresponding with the HDR monitor associated with the remote desktop client device of the remote desktop session is obtained at the video driver of the remote desktop server. In embodiments, the updated monitor configuration data is obtained as refreshed monitor configuration data via the dynamic virtual channel using the enhanced protocol. The updated monitor configuration data may include an indication of a resolution modification, a display orientation modification, a display scaling modification, a color depth modification, a refresh rate modification, and/or the like.

At block 510, the updated monitor configuration data is used to update the virtual monitor corresponding with the HDR monitor. Thereafter, at block 512, the second graphical data rendered using the updated virtual monitor for presenting in association with the remote desktop client device is provided.

Accordingly, described various aspects of technology directed to systems and methods for facilitating efficient management of monitor configuration data in a remote desktop environment have been described. It is understood that various features, subcombinations, and modifications of the embodiments described herein are of utility and may be employed in other embodiments without reference to other features or subcombinations. Moreover, the order and sequences of steps shown in the example methods 300, 400, and 500 are not meant to limit the scope of the present disclosure in any way, and in fact, the steps may occur in a variety of different sequences within embodiments hereof. Such variations and combinations thereof are also contemplated to be within the scope of embodiments of this disclosure.

In some embodiments, a computerized system, such as the computerized system described in any of the embodiments above, comprises one or more processors and one or more computer storage media storing computer-useable instructions that, when executed by the one or more processors, cause the one or more processors to perform operations. The operations comprise providing, via a dynamic virtual channel established between a remote desktop client device and a remote desktop server, a global set of monitor configuration data for a remote desktop session. The operations may further comprise identifying, at the remote desktop client device, an updated set of monitor configuration data during the remote desktop session. The operations may further comprise providing, via the dynamic virtual channel, the updated set of monitor configuration data for the remote desktop session. In this way, embodiments of this disclosure enable an improved implementation of managing monitor configuration data in a remote desktop environment. Further, in this way, embodiments, as described herein, reduce computing resources used in providing monitor configuration data by limiting the data communicated and processed. Moreover, embodiments, as described herein, enable implementing HDR display technology in a remote desktop environment by effectively using monitor configuration data.

In any combination of the above embodiments of the computerized system, the method further includes receiving, at the remote desktop client device, encoded graphical data that corresponds with the updated set of monitor configuration data for the remote desktop session.

In any combination of the above embodiments of the computerized system, the method further includes receiving, at the remote desktop client device at a first instance, the first encoded graphical data that corresponds with the global set of monitor configuration data for the remote desktop session, and receiving, at the remote desktop client device at a second instance, the second encoded graphical data that corresponds with the updated set of monitor configuration data for the remote desktop session.

In any combination of the above embodiments of the computerized system, the global set of monitor configuration data comprises an entire set of monitor configuration data associated with a layout of monitors associated with the remote desktop session, and the updated set of monitor configuration data comprises a portion of monitor configuration data associated with an update corresponding with a particular monitor of the layout of monitors associated with the remote desktop session.

In any combination of the above embodiments of the computerized system, the updated set of monitor configuration data is provided by a remote access protocol stack of the remote desktop server to a video driver of the remote desktop server for configuring one or more virtual monitors corresponding with the updated set of monitor configuration data.

In any combination of the above embodiments of the computerized system, the one or more virtual monitors corresponding with the updated set of monitor configuration data is identified based on one or more monitor identifiers included in an enhanced protocol used to provide the updated monitor configuration data.

In any combination of the above embodiments of the computerized system, the global monitor configuration data corresponds with at least one high dynamic range (HDR) monitor.

In any combination of the above embodiments of the computerized system, an enhanced protocol provides an indication of the global set of monitor configuration data, and the enhanced protocol provides an indication of the updated set of monitor configuration data.

In some embodiments, a computing system is defined. The computing system comprises a processor and computer storage memory having computer-executable instructions stored thereon which, when executed by the processor, configure the computing system to perform operations comprising: providing, via a dynamic virtual channel established between a remote desktop client device and a remote desktop server, a global set of monitor configuration data for a remote desktop session; identifying, at the remote desktop client device, an updated set of monitor configuration data during the remote desktop session; and providing, via the dynamic virtual channel, the updated set of monitor configuration data for the remote desktop session.

In any combination of the above embodiments of the computing system, the instructions when executed by the processor, further configure the computing system to perform operations comprising receiving, at the remote desktop client device, encoded graphical data that corresponds with the updated set of monitor configuration data for the remote desktop session.

In any combination of the above embodiments of the computing system, the instructions when executed by the processor, further configure the computing system to perform operations comprising receiving, at the remote desktop client device at a first instance, first encoded graphical data that corresponds with the global set of monitor configuration data for the remote desktop session; and receiving, at the remote desktop client device at a second instance, second encoded graphical data that corresponds with the updated set of monitor configuration data for the remote desktop session.

In any combination of the above embodiments of the computing system, the global set of monitor configuration data comprises an entire set of monitor configuration data associated with a layout of monitors associated with the remote desktop session, and the updated set of monitor configuration data comprises a portion of monitor configuration data associated with an update corresponding with a particular monitor of the layout of monitors associated with the remote desktop session.

In any combination of the above embodiments of the computing system, the updated set of monitor configuration data is provided by a remote access protocol stack of the remote desktop server to a video driver of the remote desktop server for configuring one or more virtual monitors corresponding with the updated set of monitor configuration data.

In any combination of the above embodiments of the computing system, the one or more virtual monitors corresponding with the updated set of monitor configuration data are identified based on one or more monitor identifiers included in an enhanced protocol used to provide the updated monitor configuration data.

In any combination of the above embodiments of the computing system, the global monitor configuration data corresponds with at least one high dynamic range (HDR) monitor.

In any combination of the above embodiments of the computing system, an enhanced protocol provides an indication of the global set of monitor configuration data, and the enhanced protocol provides an indication of the updated set of monitor configuration data.

In other embodiments, a computer-implemented method is provided. The method includes obtaining, via a dynamic virtual channel established between a remote desktop client device and a remote desktop server, a global set of monitor configuration data for a remote desktop session. The method may further include providing the first encoded graphical data that corresponds with the global set of monitor configuration data for the remote desktop session. The method may further include obtaining, via the dynamic virtual channel, an updated set of monitor configuration data during the remote desktop session. The method may further include providing the second encoded graphical data that corresponds with the updated set of monitor configuration data for the remote desktop session. In this way, embodiments of this disclosure enable an improved implementation of managing monitor configuration data in a remote desktop environment. Further, in this way, embodiments, as described herein, reduce computing resources used in providing monitor configuration data by limiting the data communicated and processed. Moreover, embodiments, as described herein, enable implementing HDR display technology in a remote desktop environment by effectively using monitor configuration data.

In any combination of the above embodiments of the computer-implemented method, the second encoded graphical data is generated based on HDR graphical data obtained at a video driver of the remote desktop server in accordance with configuring one or more virtual monitors using the updated monitor configuration data.

In any combination of the above embodiments of the computer-implemented method, the global set of monitor configuration data includes an indication of a configuration mode, a display mode, a scale factor, a physical size, a colorimetry, a Standard Dynamic Range (SDR) white level, a monitor description, and/or a container information.

In any combination of the above embodiments of the computer-implemented method, the updated set of monitor configuration data includes an indication of a modification of an attribute of a particular monitor of a plurality of monitors associated with a remote desktop session.

In any combination of the above embodiments of the computer-implemented method, the global set of monitor configuration data comprises an entire set of monitor configuration data associated with a layout of monitors associated with the remote desktop session, and the updated set of monitor configuration data comprises a portion of monitor configuration data associated with an update corresponding with a particular monitor of the layout of monitors associated with the remote desktop session.

In any combination of the above embodiments of the computer-implemented method, the updated set of monitor configuration data is obtained at a remote access protocol stack of the remote desktop server and provided to a video driver of the remote desktop server for configuring one or more virtual monitors corresponding with the updated monitor configuration data.

In any combination of the above embodiments of the computer-implemented method, the one or more virtual monitors corresponding with the updated set of monitor configuration data is identified based on one or more monitor identifiers included in an enhanced protocol used to provide the updated monitor configuration data.

In other embodiments, one or more computer storage media having computer-executable instructions embodied thereon that, when executed by one or more processors, cause the one or more processors to perform a method that is provided. The method includes obtaining, at a video driver of a remote desktop server, global monitor configuration data corresponding with a high dynamic range (HDR) monitor associated with a remote desktop client device of a remote desktop session. The method also includes using the global monitor configuration data to configure a virtual monitor corresponding with the HDR monitor. The method may further include providing first graphical data rendered using the virtual monitor for presenting in association with the remote desktop client device. The method may further include obtaining, at the video driver of the remote desktop server, updated monitor configuration data corresponding with a modified attribute corresponding with the HDR monitor associated with the remote desktop client device of the remote desktop session. The method may also include using the updated monitor configuration data to update the virtual monitor corresponding with the HDR monitor. The method may also include providing second graphical data rendered using the updated virtual monitor for presenting in association with the remote desktop client device. In this way, embodiments of this disclosure enable an improved implementation of managing monitor configuration data in a remote desktop environment. Further, in this way, embodiments, as described herein, reduce computing resources used in providing monitor configuration data by limiting the data communicated and processed. Moreover, embodiments, as described herein, enable implementing HDR display technology in a remote desktop environment by effectively using monitor configuration data.

In any combination of the above embodiments of the media, the global monitor configuration data is obtained as an initial monitor configuration data via a dynamic virtual channel, and the updated monitor configuration data is obtained as a refreshed monitor configuration data via the dynamic virtual channel.

In any combination of the above embodiments of the media, the virtual monitor to configure using the global monitor configuration data is identified based on a monitor identifier associated with the HDR monitor communicated via an enhanced protocol used to communicate the updated monitor configuration data.

In any combination of the above embodiments of the media, an enhanced protocol provides an indication of the global monitor configuration data, and the enhanced protocol provides an indication of the updated monitor configuration data.

In any combination of the above embodiments of the media, the updated monitor configuration data includes an indication of a resolution modification, a display orientation modification, a display scaling modification, a color depth modification, a refresh rate modification, or a combination thereof.

Methods, computer systems, and computer storage media are provided for facilitating implementation of efficient management of monitor configuration data in a remote desktop environment. In embodiments, a dynamic virtual channel established between a remote desktop client device and a remote desktop server is used to provide a global set of monitor configuration data for a remote desktop session. Thereafter, at the remote desktop client device, an updated set of monitor configuration data is identified during the remote desktop session. The updated set of monitor configuration data for the remote desktop session is provided to the remote desktop server via the dynamic virtual channel.

### Overview of an Exemplary Operating Environment

Having briefly described an overview of aspects of the technology described herein, an exemplary operating environment in which aspects of the technology described herein may be implemented is described below in order to provide a general context for various aspects of the technology described herein.

Referring to the drawings in general, and to FIG. 6 in particular, an exemplary operating environment for implementing aspects of the technology described herein is shown and designated generally as computing device 600. Computing device 600 is just one example of a suitable computing environment and is not intended to suggest any limitation as to the scope of use or functionality of the technology described herein, and nor should the computing device 600 be interpreted as having any dependency or requirement relating to any one or combination of components illustrated.

The technology described herein may be described in the general context of computer code or machine-usable instructions, including computer-executable instructions such as program components, being executed by a computer or other machine, such as a personal data assistant or other handheld device. Generally, program components, including routines, programs, objects, components, data structures, and the like, refer to code that performs particular tasks or implements particular abstract data types. Aspects of the technology described herein may be practiced in a variety of system configurations, including handheld devices, consumer electronics, general-purpose computers, and specialty computing devices. Aspects of the technology described herein may also be practiced in distributed computing environments where tasks are performed by remote-processing devices that are linked through a communications network.

With continued reference to FIG. 6, computing device 600 includes a bus 610 that directly or indirectly couples the following devices: memory 612, one or more processors 614, one or more presentation components 616, input/output (I/O) ports 618, I/O components 620, an illustrative power supply 622, and a radio(s) 624. Bus 610 represents what may be one or more buses (such as an address bus, data bus, or combination thereof). Although the various blocks of FIG. 6 are shown with lines for the sake of clarity, in reality, delineating various components is not so clear, and metaphorically, the lines would more accurately be grey and fuzzy. For example, one may consider a presentation component such as a display device to be an I/O component. Also, processors have memory. The inventors hereof recognize that such is the nature of the art, and reiterate that the diagram of FIG. 6 is merely illustrative of an exemplary computing device that can be used in connection with one or more aspects of the technology described herein. Distinction is not made between such categories as "workstation," "server," "laptop," and "handheld device," as all are contemplated within the scope of FIG. 6 and refer to "computer" or "computing device."

Computing device 600 typically includes a variety of computer-readable media. Computer-readable media can be any available media that can be accessed by computing device 600 and includes both volatile and nonvolatile, removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program sub-modules, or other data.

Computer storage media includes RAM, ROM, EEPROM, flash memory or other memory technology, CD-ROM, digital versatile disks (DVDs) or other optical disk storage, magnetic cassettes, magnetic tape, magnetic disk storage, or other magnetic storage devices. Computer storage media does not comprise a propagated data signal.

Communication media typically embodies computer-readable instructions, data structures, program sub-modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above should also be included within the scope of computer-readable media.

Memory 612 includes computer storage media in the form of volatile and/or nonvolatile memory. The memory 612 may be removable, non-removable, or a combination thereof. Exemplary memory includes solid-state memory, hard drives, and optical-disc drives. Computing device 600 includes one or more processors 614 that read data from various entities such as bus 610, memory 612, or I/O components 620. Presentation component(s) 616 present data indications to a user or other device. Exemplary presentation components 616 include a display device, speaker, printing component, and vibrating component. I/O port(s) 618 allow computing device 600 to be logically coupled to other devices including I/O components 620, some of which may be built-in.

Illustrative I/O components include a microphone, joystick, game pad, satellite dish, scanner, printer, display device, wireless device, a controller (such as a keyboard and a mouse), a natural user interface (NUI) (such as touch interaction, pen [or stylus] gesture, and gaze detection), and the like. In aspects, a pen digitizer (not shown) and accompanying input instrument (also not shown but which may include, by way of example only, a pen or a stylus) are provided in order to digitally capture freehand user input. The connection between the pen digitizer and processor(s) 614 may be direct or via a coupling utilizing a serial port, parallel port, and/or other interface and/or system bus known in the art. Furthermore, the digitizer input component may be a component separated from an output component such as a display device, or in some aspects, the usable input area of a digitizer may be coextensive with the display area of a display device, integrated with the display device, or may exist as a separate device overlaying or otherwise appended to a display device. Any and all such variations, and any combination thereof, are contemplated to be within the scope of aspects of the technology described herein.

An NUI processes air gestures, voice, or other physiological inputs generated by a user. Appropriate NUI inputs may be interpreted as ink strokes for presentation in association with the computing device 600. These requests may be transmitted to the appropriate network element for further processing. An NUI implements any combination of speech recognition, touch and stylus recognition, facial recognition, biometric recognition, gesture recognition both on screen and adjacent to the screen, air gestures, head and eye tracking, and touch recognition associated with displays on the computing device 600. The computing device 600 may be equipped with depth cameras, such as stereoscopic camera systems, infrared camera systems, RGB camera systems, and combinations of these, for gesture detection and recognition. Additionally, the computing device 600 may be equipped with accelerometers or gyroscopes that enable detection of motion. The output of the accelerometers or gyroscopes may be provided to the display of the computing device 600 to render immersive augmented reality or virtual reality.

A computing device may include radio(s) 624. The radio 624 transmits and receives radio communications. The computing device may be a wireless terminal adapted to receive communications and media over various wireless networks. Computing device 600 may communicate via wireless protocols, such as code-division multiple access ("CDMA"), global system for mobiles ("GSM"), or time-division multiple access ("TDMA"), as well as others, to communicate with other devices. The radio communications may be a short-range connection, a long-range connection, or a combination of both a short-range and a long-range wireless telecommunications connection. When we refer to "short" and "long" types of connections, we do not mean to refer to the spatial relation between two devices. Instead, we are generally referring to short range and long range as different categories, or types, of connections (i.e., a primary connection and a secondary connection). A short-range connection may include a Wi-Fi^{®} connection to a device (e.g., mobile hotspot) that provides access to a wireless communications network, such as a WLAN connection using the 802.11 protocol. A Bluetooth connection to another computing device is a second example of a short-range connection. A long-range connection may include a connection using one or more of CDMA, GPRS, GSM, TDMA, and 802.16 protocols.

The technology described herein has been described in relation to particular aspects, which are intended in all respects to be illustrative rather than restrictive.

## Claims

1. A computing system comprising:
a processor; and
computer storage memory having computer-executable instructions stored thereon which, when executed by the processor, configure the computing system to perform operations comprising:
providing (302), via a dynamic virtual channel established between a remote desktop client device and a remote desktop server, a global set of monitor configuration data for a remote desktop session;
identifying (304), at the remote desktop client device, an updated set of monitor configuration data during the remote desktop session; and
providing (306), via the dynamic virtual channel, the updated set of monitor configuration data for the remote desktop session.

2. The computing system of claim 1, further comprising either
receiving, at the remote desktop client device, encoded graphical data that corresponds with the updated set of monitor configuration data for the remote desktop session; or
receiving, at the remote desktop client device at a first instance, first encoded graphical data that corresponds with the global set of monitor configuration data for the remote desktop session, and receiving, at the remote desktop client device at a second instance, second encoded graphical data that corresponds with the updated set of monitor configuration data for the remote desktop session.

3. The computing system of claim 1 or claim 2, wherein either:
the global monitor configuration data corresponds with at least one high dynamic range "HDR" monitor; and/or
the global set of monitor configuration data comprises an entire set of monitor configuration data associated with a layout of monitors associated with the remote desktop session, and the updated set of monitor configuration data comprises a portion of monitor configuration data associated with an update corresponding with a particular monitor of the layout of monitors associated with the remote desktop session.

4. The computing system of any previous claim, wherein the updated set of monitor configuration data is provided by a remote access protocol stack of the remote desktop server to a video driver of the remote desktop server for configuring one or more virtual monitors corresponding with the updated set of monitor configuration data, and optionally, wherein the one or more virtual monitors corresponding with the updated set of monitor configuration data are identified based on one or more monitor identifiers included in an enhanced protocol used to provide the updated monitor configuration data.

5. The computing system of any previous claim, wherein an enhanced protocol provides an indication of the global set of monitor configuration data, and the enhanced protocol provides an indication of the updated set of monitor configuration data.

6. A computer-implemented method comprising:
obtaining (402), via a dynamic virtual channel established between a remote desktop client device and a remote desktop server, a global set of monitor configuration data for a remote desktop session;
providing (404) first encoded graphical data that corresponds with the global set of monitor configuration data for the remote desktop session;
obtaining (406), via the dynamic virtual channel, an updated set of monitor configuration data during the remote desktop session; and
providing (408) second encoded graphical data that corresponds with the updated set of monitor configuration data for the remote desktop session.

7. The method of claim 6, wherein the second encoded graphical data is generated based on HDR graphical data obtained at a video driver of the remote desktop server in accordance with configuring one or more virtual monitors using the updated monitor configuration data.

8. The method of claim 6 or claim 7, wherein the global set of monitor configuration data at least one of:
includes an indication of a configuration mode, a display mode, a scale factor, a physical size, a colorimetry, a Standard Dynamic Range "SDR" white level, a monitor description, and/or a container information; and
comprises an entire set of monitor configuration data associated with a layout of monitors associated with the remote desktop session, and the updated set of monitor configuration data comprises a portion of monitor configuration data associated with an update corresponding with a particular monitor of the layout of monitors associated with the remote desktop session

9. The method of any of claims 6 to 8, wherein the updated set of monitor configuration data includes an indication of a modification of an attribute of a particular monitor of a plurality of monitors associated with a remote desktop session.

10. The method of any of claims 6 to 9, wherein the updated set of monitor configuration data is obtained at a remote access protocol stack of the remote desktop server and provided to a video driver of the remote desktop server for configuring one or more virtual monitors corresponding with the updated monitor configuration data, and optionally, wherein the one or more virtual monitors corresponding with the updated set of monitor configuration data are identified based on one or more monitor identifiers included in an enhanced protocol used to provide the updated monitor configuration data.

11. One or more computer storage media having computer-executable instructions embodied thereon that, when executed by one or more processors, cause the one or more processors to perform a method, the method comprising:
obtaining (502), at a video driver of a remote desktop server, global monitor configuration data corresponding with a high dynamic range "HDR" monitor associated with a remote desktop client device of a remote desktop session;
using (504) the global monitor configuration data to configure a virtual monitor corresponding with the HDR monitor;
providing (506) first graphical data rendered using the virtual monitor for presenting in association with the remote desktop client device;
obtaining (508), at the video driver of the remote desktop server, updated monitor configuration data corresponding with a modified attribute corresponding with the HDR monitor associated with the remote desktop client device of the remote desktop session;
using (510) the updated monitor configuration data to update the virtual monitor corresponding with the HDR monitor; and
providing (512) second graphical data rendered using the updated virtual monitor for presenting in association with the remote desktop client device.

12. The media of claim 11, wherein the global monitor configuration data is obtained as an initial monitor configuration data via a dynamic virtual channel, and the updated monitor configuration data is obtained as refreshed monitor configuration data via the dynamic virtual channel.

13. The media of claim 11 or claim 12, wherein the virtual monitor to configure using the global monitor configuration data is identified based on a monitor identifier associated with the HDR monitor communicated via an enhanced protocol used to communicate the updated monitor configuration data.

14. The media of any of claims 11 to 13, wherein an enhanced protocol provides an indication of the global monitor configuration data, and the enhanced protocol provides an indication of the updated monitor configuration data.

15. The media of any of claims 11 to 14, wherein the updated monitor configuration data includes an indication of a resolution modification, a display orientation modification, a display scaling modification, a color depth modification, a refresh rate modification, or a combination thereof.
